(19) Europäisches Patentamt
European Patent Office
Office européen des brevets

(11) EP 4 385 757 A1

(12) EUROPEAN PATENT APPLICATION

(43) Date of publication:
**19.06.2024 Bulletin 2024/25**

(21) Application number: **23216375.8**

(22) Date of filing: **13.12.2023**

(51) International Patent Classification (IPC):
***B60C 1/00*** *(2006.01)* ***B60C 9/00*** *(2006.01)*
***B60C 9/20*** *(2006.01)*

(52) Cooperative Patent Classification (CPC):
**B60C 1/0016; B60C 9/0064; B60C 9/2009;**
B60C 11/005; B60C 2001/0066; B60C 2009/0021;
B60C 2009/2016; B60C 2009/2061;
B60C 2009/2064; B60C 2009/2077;
B60C 2009/2083; B60C 2009/209; B60C 2011/0033

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 JP 2022201134**
**26.04.2023 JP 2023072426**

(71) Applicant: **Sumitomo Rubber Industries, Ltd.**
**Kobe-shi, Hyogo 651-0072 (JP)**

(72) Inventors:
- **MISAKI, Momoka**
**Kobe-shi, Hyogo, 651-0072 (JP)**
- **ISHIDA, Shingo**
**Kobe-shi, Hyogo, 651-0072 (JP)**
- **MIKI, Takashi**
**Kobe-shi, Hyogo, 651-0072 (JP)**
- **SUZUKI, Masumi**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) Provided is a tire with excellent durability during high-speed driving. The tire includes a belt layer (17), the belt layer including single-strand steel monofilaments (17A), the belt layer including a number E of 38/50 mm or more and 68/50 mm or less of the single-strand steel monofilaments in a tire width direction when viewed in a radial cross-section of the tire.

FIG.2

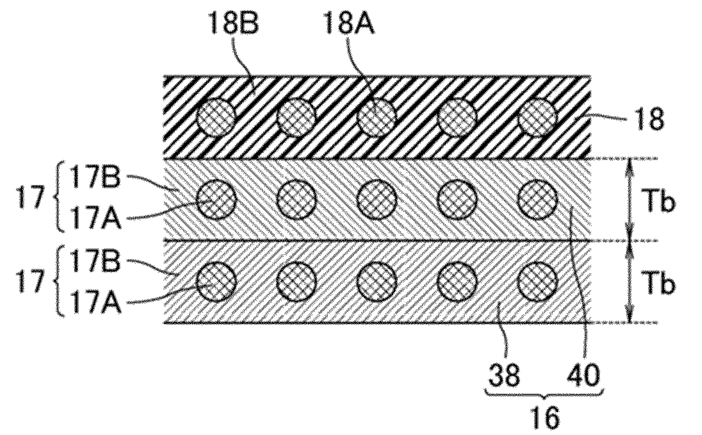


EP 4 385 757 A1

## Description

TECHNICAL FIELD

The present invention relates to a tire.

BACKGROUND ART

A variety of techniques have been studied to improve various tire properties. With regard to fuel economy of tires, for example, Patent Literatures 1 and 2 propose the optimization of the formulation of rubber compositions for tire tread portions to improve fuel economy.

CITATION LIST

PATENT LITERATURE

Patent Literature 1: JP 2018-178034 A
Patent Literature 2: JP 2019-206643 A

SUMMARY OF INVENTION

TECHNICAL PROBLEM

With well-developed highways and improved vehicle performances these days, it is not uncommon that vehicles travel at high speeds. Presumably, durability during high-speed driving is also desired to be improved.
The present invention aims to solve the above problem and improve durability during high-speed driving.

SOLUTION TO PROBLEM

The present invention relates to a tire, including a belt layer,

the belt layer including single-strand steel monofilaments,
the belt layer including a number E of 38/50 mm or more and 68/50 mm or less of the single-strand steel monofilaments in a tire width direction when viewed in a radial cross-section of the tire.

ADVANTAGEOUS EFFECTS OF INVENTION

The present invention relates to a tire, including a belt layer, the belt layer including single-strand steel monofilaments, the belt layer including a number E of 38/50 mm or more and 68/50 mm or less of the single-strand steel monofilaments in a tire width direction when viewed in a radial cross-section of the tire. Thus, the tire can obtain improved durability during high-speed driving.

BRIEF DESCRIPTION OF DRAWINGS

FIG. 1 is a meridional cross-sectional view of a pneumatic tire according to the present invention.
FIG. 2 is an enlarged cross-sectional view of a belt layer and a band layer in the tire in FIG. 1.
FIG. 3 is an enlarged cross-sectional view of the belt layer and the band layer of the tire in FIG. 1 in the vicinity of the tire equator.
FIG. 4 is an enlarged cross-sectional view showing a tread portion and its vicinity in the tire in FIG. 1.

DESCRIPTION OF EMBODIMENTS

The present invention relates to a tire including a belt layer. The belt layer includes single-strand steel monofilaments. The belt layer includes a number E of 38/50 mm or more and 68/50 mm or less of the single-strand steel

monofilaments in a tire width direction when viewed in a radial cross-section of the tire.

The reason for the advantageous effect is not exactly clear, but it is presumably due to the following mechanism.

In the present invention, the belt layer includes single-strand steel monofilaments. Unlike conventional cords, the filaments are not twisted and therefore can reduce the contact area with the surrounding rubber layer. The reduced contact area can reduce the deformation of the surrounding rubber accompanying the deformation of the belt layer occurring when the tread portion touches the ground. Presumably, this suppresses heat generation and heat build-up in the belt layer.

Moreover, the number E of the steel monofilaments in a radial cross-section of the tire is controlled to be 38/50 mm or more to increase the stiffness of the belt layer, thereby suppressing the deformation of the belt layer. Thus, the deformation of the entire belt layer as well as both the deformation of steel cords and the deformation of the surrounding rubber layer in the belt layer are suppressed. As a result, presumably, durability during high-speed driving can be improved.

Meanwhile, an excessively large number E increases the contact area between the cords and the coating rubber to potentially increase the impact of heat generation. This issue may be prevented by adjusting the number E to 68/50 mm or less.

Presumably, durability during high-speed driving is improved due to the above-described mechanism.

FIG. 1 is a meridional cross-sectional view of a pneumatic tire 2 (pneumatic tire), including the axis of rotation of the tire, according to the present embodiment in the normal state.

Herein, the dimensions of the parts of the tire are measured for the tire in the normal state, unless otherwise stated.

Herein, the term "normal state" refers to a state where the tire is mounted on a normal rim (not shown), inflated to a normal internal pressure, and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

Also herein, the term "normal load" refers to a load specified for each tire by the standard in a standard system including standards according to which the tire is provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire

Dt: outer diameter (mm) of tire
Ht: cross-sectional height (mm) of tire
Wt: cross-sectional width (mm) of tire

The term "cross-sectional width Wt (mm)" of the tire refers to the largest width of the tire in the normal state between the outer surfaces of the sidewalls, excluding patterns, letters, and the like on the sides of the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to a half of the difference between the outer diameter Dt and the rim diameter R of the tire. In other words, the cross-sectional height Ht can be determined by (Dt - R)/2.

In FIG. 1, the vertical direction corresponds to the radial direction of the tire 2, the horizontal direction corresponds to the axial direction of the tire 2, and the direction perpendicular to the paper corresponds to the circumferential direction of the tire 2. A tread portion 4 includes a cap layer 30 and a base layer 28.

Although FIG. 1 shows an example of a two-layer tread portion 4 consisting of a cap layer 30 and a base layer 28, the tread portion 4 may include a single-layer tread or a three or more-layer tread.

In the tire 2, each sidewall 6 extends radially substantially inwardly from the end of the tread portion 4. The radially outer portion of the sidewall 6 is bonded to the tread portion 4. The radially inner portion of the sidewall 6 is bonded to a clinch 10. The sidewall 6 can prevent damage to a carcass 14.

In FIG. 1, each wing 8 is located between the tread portion 4 and the sidewall 6. The wing 8 is bonded to both the tread portion 4 and the sidewall 6.

Each clinch 10 is located radially substantially inward of the sidewall 6 and is radially outward of a bead 12 and the carcass 14.

Each bead 12 is located axially inward of the clinch 10. The bead 12 includes a core 32 and an apex 34 that radially outwardly extends from the core 32. The core 32 desirably has a ring shape and contains a wound non-stretchable wire. The apex 34 is radially outwardly tapered.

The carcass 14 includes a carcass ply 36. Although the carcass 14 in the tire 2 includes one carcass ply 36, it may include two or more carcass plies.

In the tire 2, the carcass ply 36 extends between the beads 12 on opposite sides along the tread portion 4 and the sidewalls 6. The carcass ply 36 is folded around each core 32 from the inside to the outside in the axial direction. The thus folded carcass ply 36 is provided with a main portion 36a and a pair of folded portions 36b. Namely, the carcass ply 36 includes the main portion 36a and a pair of the folded portions 36b.

Though not shown, the carcass ply 36 desirably consists of a large number of parallel cords and a coating rubber. The absolute value of the angle of each cord with respect to the equator is suitably from 75° to 90°. In other words, the carcass 14 preferably has a radial structure.

In FIG. 1, a belt layer 16 is located radially inward of the tread portion 4. The belt layer 16 is stacked on the carcass 14. The belt layer 16 reinforces the carcass 14. In the tire 2 in FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times, but preferably not more than 0.9 times the cross-sectional width of the tire 2. Although the tire 2 in FIG. 1 includes a two-layer belt layer consisting of the interior layer 38 and the exterior layer 40, the tire may include a single belt layer or two or more belt layers.

The interior layer 38, the exterior layer 40, and optional layers constituting other layers in the belt layer 16 each desirably include a large number of parallel single-strand steel cords (steel monofilaments) and a coating rubber. In other words, the layers constituting the belt layer each include a large number of parallel steel monofilaments.

FIG. 2 is an enlarged cross-sectional view of the belt layer 16 (the interior layer 38 and the exterior layer 40) and a band layer 18.

As shown in FIG. 2, each belt layer 17 includes belt cords 17A and a coating rubber 17B coating the belt cords 17A. The belt cords 17A are single-strand steel cords (steel monofilaments). Although the cords in the present embodiment are single-strand cords having a circular transverse section, the cords are not limited to this embodiment and may have other shapes, such as an oval or polygonal shape, in a transverse section. In view of properties such as durability, the filaments may also be preformed before use.

As shown in FIG. 2, for example, the belt layers 17 include a first belt layer (the interior layer 38) and a second belt layer (the exterior layer 40) that is adjacent to the first belt layer in the tire radial direction. The second belt layer (the exterior layer 40) is located outward of the first belt layer (the interior layer 38) in the tire radial direction.

Each belt cord 17A in the present embodiment is formed of a single-strand steel monofilament. Such a belt cord 17A can reduce deformation of the belt layer 17 during driving. The belt cords 17A in the first belt layer (the interior layer 38) and the belt cords 17A in the second belt layer (the exterior layer 40) may have the same shape or different

shapes.

The outer diameter D of each single-strand steel monofilament is preferably 0.32 mm or more, more preferably 0.34 mm or more, still more preferably 0.36 mm or more, further preferably 0.38 mm or more, while it is preferably 0.48 mm or less, more preferably 0.42 mm or less, still more preferably 0.40 mm or less. When the diameter D is within the range indicated above, the advantageous effect can be suitably achieved.

Here, the outer diameter D of each steel monofilament (single-strand steel cord) refers to the outer diameter of the filament. The cross-sectional shape of each steel monofilament relative to the longitudinal direction thereof may be circular, ovel, polygonal, etc. When the cross-sectional shape is circular, the outer diameter D refers to the diameter of the circle. When the cross sectional shape is oval or polygonal, the outer diameter D refers to an average of the largest diameter (major diameter) and diameters perpendicular to the largest diameter.

The mechanism by which the advantageous effect can be better achieved by adjusting the filament diameter within the range indicated above is not clear, but it is believed that adjusting the cord diameter to a predetermined value or less can prevent the belt layer from being too stiff, thereby improving the ground contact performance; while adjusting the cord diameter to a predetermined value or more can better suppress cord breakage. Thus, it is believed that the durability during high-speed driving can be improved.

The tensile strength at break of the single-strand steel monofilaments is preferably 250 N or more, more preferably 350 N or more, still more preferably 360 N or more, particularly preferably 367 N or more, while it is preferably 570 N or less, more preferably 480 N or less, still more preferably 450 N or less, particularly preferably 430 N or less, most preferably 420 N or less. When the tensile strength at break is within the range indicated above, the advantageous effect tends to be more suitably achieved.

Herein, the tensile strength at break (cutting load) is measured in accordance with "Testing Methods for Steel Cords" stipulated in JIS G 3510 by a tensile test under the following measurement conditions.

(Measurement conditions)

Grip distance: 700 mm
Tensile rate: 50 mm/min
Measurement temperature: 23°C

The mechanism by which the advantageous effect can be better achieved by controlling the tensile strength at break within the range indicated above, particularly 250 to 480 N, is not clear, but it is believed as follows. The steel monofilaments controlled to have a tensile strength at break of not less than the lower limit are less likely to break upon deformation during driving. In contrast, with an excessively high tensile strength at break, the difference in the strength (stiffness) between the steel monofilaments and the surrounding rubber layer is too large, leading to the concern of easy separation at the interface. Such separation can be prevented by adjusting the tensile strength to not more than the upper limit. Presumably, durability during high-speed driving is thus improved.

For example, the belt cords 17A are desirably inclined at an angle of 15 to 45 degrees with respect to the tire circumferential direction.

The belt cords 17A in the first belt layer (the interior layer 38) and the belt cords 17A in the second belt layer (the exterior layer 40) are desirably inclined in opposite directions with respect to the tire circumferential direction so that the respective cords cross each other, though the present invention is not limited to this embodiment.

In view of adhesion to the coating rubber composition surrounding the belt cords 17A, plating containing copper and zinc is preferably applied to the surface of the belt cords 17A. Moreover, plating is more preferably applied which contains a metallic element whose ionization tendency is between those of copper and zinc, such as cobalt, nickel, bismuth, or antimony, in addition to the copper and zinc.

Also, in view of adhesion to the surrounding rubber composition, the belt cords 17A preferably have a polybenzoxazine compound layer on the surface.

The coating rubber 17B coating the belt cords 17A desirably contains a well-known rubber material as well as a phenolic thermosetting resin, silica, a salt of an organic fatty acid and a metal whose ionization tendency is between those of copper and zinc, such as cobalt, nickel, bismuth, or antimony, as described above, a polybenzoxazine compound, or other materials.

The belt layer 16 includes the belt cords 17A formed of the single-strand steel monofilaments. When viewed in a radial cross-section of the tire, the number E of the single-strand steel monofilaments in the tire width direction in the belt layer is 38/50 mm or more and 68/50 mm or less.

The number E (end counts (ends) of the single-strand steel monofilaments per 50 mm in the tire width direction) is preferably 40/50 mm or more, more preferably 44/50 mm or more, further preferably 46/50 mm or more, while it is

preferably 65/50 mm or less, more preferably 60/50 mm or less, still more preferably 57/50 mm or less, further preferably 55/50 mm or less, further preferably 51/50 mm or less, further preferably less than 50/50 mm. When the number E is within the range indicated above, the advantageous effect tends to be more suitably achieved.

In the present invention, the number E refers to the number in a 50-mm width region centering on the tire equator CL in the widest belt layer in the tire axis direction. The number E in a two-layer belt layer consisting of the interior layer 38 and the exterior layer 40 in FIG. 1 refers to the number of the belt cords 17A in a 50-mm width region centering on the tire equator CL in the widest interior layer 38.

To better achieve the advantageous effect, in the tire 2, a product (D × E) of the outer diameter D (mm) and the number E (number/50 mm) in the tire width direction of the single-strand steel monofilaments (belt cords 17A) in the belt layer 16 is desirably 25 (mm·number/50 mm) or less.

The product of D × E is preferably 22 (mm·number/50 mm) or less, more preferably 21 (mm·number/50 mm) or less, still more preferably 20 (mm·number/50 mm) or less, further preferably 19 (mm·number/50 mm) or less. The lower limit is not limited, and it is preferably 5 (mm·number/50 mm) or more, more preferably 10 (mm·number/50 mm) or more, still more preferably 13 (mm·number/50 mm) or more, further preferably 15 (mm·number/50 mm) or more, further preferably 17 (mm·number/50 mm) or more, further preferably 18 (mm· number/50 mm) or more. When the product of D × E is within the range indicated above, the advantageous effect tends to be more suitably achieved.

The mechanism by which the advantageous effect can be better achieved by controlling the product of D × E within the range indicated above, particularly 20 or less, is not clear, but it is believed that controlling the product of the outer diameter D and the number E to be not more than the certain value can facilitate suppression of heat generation caused by deformation at the interface between the steel cords and the rubber layers. Presumably, durability during high-speed driving is thus improved.

FIG. 3 is an enlarged cross-sectional view of the belt layer 16 (the interior layer 38 and the exterior layer 40) and the band layer 18 in the vicinity of the tire equator CL.

As shown in FIG. 3, a belt cord 17A5 in the first belt layer (the interior layer 38) is a belt cord on the tire equator CL among the belt cords 17A in the first belt layer. A belt cord 17A6 in the second belt layer (the exterior layer 40) is a belt cord on the tire equator among the belt cords 17A in the second belt layer.

In the tire including two or more belt layers, the belt layers include at least one pair of adjacent belt layers in which the distance S between a single-strand steel monofilament on the tire equator in one belt layer and a single-strand steel monofilament on the tire equator in the other belt layer is desirably 0.30 mm or more and 0.58 mm or less. Specifically, the distance S in the two-layer belt layer consisting of the interior layer 38 and the exterior layer 40 in FIG. 3 is a distance between the belt cord 17A5 (single-strand steel monofilament) on the tire equator in the interior layer 38 and the belt cord 17A6 (single-strand steel monofilament) on the tire equator in the exterior layer 40.

The distance S is preferably 0.35 mm or more, more preferably 0.40 mm or more, still more preferably 0.42 mm or more, while it is preferably 0.54 mm or less, more preferably 0.53 mm or less, still more preferably 0.50 mm or less, further preferably 0.48 mm or less. When the distance S is within the range indicated above, the advantageous effect tends to be more suitably achieved.

The mechanism by which the advantageous effect can be better achieved by controlling the distance S within the range indicated above, particularly 0.30 mm or more and 0.50 mm or less, is not clear, but it is believed as follows. Controlling the distance between belt layers to be not less than the lower limit is considered to suppress breakage of the steel filaments in adjacent belt layers when they rub each other during driving. Controlling the distance to be not more than the upper limit can suppress heat build-up and heat generation between the rubber layers in the belt layers. This can facilitate the improvement of durability during high-speed driving.

In the above-described cases, it is sufficient that at least a pair of adjacent belt layers have a distance S within the range indicated above. Although the exemplary tire in FIG. 3 includes a two-layer belt layer, in a tire including a three or more-layer belt layer, preferably, at least a pair of adjacent belt layers have a distance S within the range indicated above, more preferably, many pairs of adjacent layers have a distance S within the range indicated above.

In the present invention, the "distance S between a single-strand steel monofilament on the tire equator in one belt layer and a single-strand steel monofilament on the tire equator in the other belt layer in adjacent belt layers" refers to a straight distance in the tire radial direction between single-strand steel monofilaments on the tire equator in respective adjacent belt layers. In the tire including a two-layer belt layer consisting of the interior layer 38 and the exterior layer 40 in FIG. 3, it is the straight distance S between the belt cord 17A5 on the tire equator CL in the first belt layer (the interior layer 38) and the belt cord 17A6 on the tire equator CL in the second belt layer (the exterior layer 40).

When no single-strand steel monofilament exits on the tire equator, the distance S refers to a distance on the tire equator CL from a straight line connecting the radially inner surfaces of two steel monofilaments closest in the tire width direction to the tire equator in one of adjacent belt layers to a straight line connecting the radially outer surfaces of two steel monofilaments closest in the tire width direction to the tire equator in the other adjacent belt layers.

In FIG. 1, the band layer 18 (belt-reinforcing layer) is located radially outward of the belt layer 16. In the tire 2 in FIG. 1, the band layer 18 has an axial width that is equal to that of the belt layer 16. The band layer 18 may have a

larger width than the belt layer 16.

The band layer 18 desirably consists of a cord and a topping rubber. The cord is spirally wound. This band layer 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The band layer 18 in the tire 2 can enhance the restraint of each belt layer 16 to enhance durability during high-speed driving and can also impart good ride quality.

An exemplary embodiment of the band layer 18 includes an organic fiber cord 18A and a reinforcing rubber 18B (band layer coating rubber composition) coating the organic fiber cord 18A. Here, the organic fiber cord has usually been subjected to dipping treatment to improve adhesion to the rubber.

Examples of the organic fiber constituting the organic fiber cord 18A include polyesters, polyamides, and celluloses. These fibers may be synthetic fibers or biomass-derived fibers. Also, in view of life cycle assessment, the organic fiber is desirably derived from a recycled or reclaimed material. The fiber may also be formed of a single component including a synthetic fiber, biomass fiber, or recycled or reclaimed fiber. Also usable are hybrid cords obtained by intertwining these fibers, multifilament cords obtained by combining the respective filaments, and cords with a chemical structure in which the respective components are chemically bound to each other.

Examples of the polyester cords include polyethylene terephthalate (PET) cords, polyethylene naphthalate (PEN) cords, and polyethylene furanoate (PEF) cords. PEF cords may be used because they have excellent resistance to air permeation compared to other polyester cords and can easily maintain the air pressure inside the tire. Moreover, the polyester cords may be hybrid cords with other organic fiber cords, in which the polyester cords have been partially replaced with other organic fiber cords such as polyamide fiber cords.

When the polyester cords are biomass-derived polyester cords, suitable examples include biomass PET cords formed from biomass-derived terephthalic acid and ethylene glycol, and biomass PEF cords formed from biomass-derived furandicarboxylic acid.

For example, the biomass polyester cords can be formed from biomass terephthalic acid, biomass ethylene glycol, etc. which are produced by converting bioethanol or furfurals, carenes, cymenes, terpenes, etc., or converting various animal- or plant-derived compounds, or directly fermenting microorganisms or the like.

Examples of the polyamide cords include aliphatic polyamides, semi-aromatic polyamides, and fully aromatic polyamides.

Aliphatic polyamides refer to polyamides having a backbone in which straight carbon chains are connected via amide bonds. Examples include Nylon 4 (PA4), Nylon 410 (PA410), Nylon 6 (PA6), Nylon 66 (PA66), Nylon 610 (PA610), Nylon 10 (PA10), Nylon 1010 (PA1010), Nylon 1012 (PA1012), and Nylon 11 (PA11). Of these, Nylon 4, Nylon 410, Nylon 610, Nylon 10, Nylon 1010, Nylon 11, etc. can be easily formed partially or fully from biomass-derived materials.

Examples of Nylon 6 and Nylon 66 include those which are produced by ring-opening polymerization of conventional chemically synthesized caprolactam and those which are produced by condensation polymerization of hexamethylenediamine and adipic acid. Other examples include Nylon 6 and Nylon 66 produced from bio-caprolactam, or bio-adipic acid and bio-hexamethylenediamine, made from bio-derived cyclohexane as a starting material. Moreover, the above-mentioned biological raw materials may be formed from sugars such as glucose. Such Nylon 6 and Nylon 66 are considered to have a similar strength to conventional ones.

Non-limiting typical examples of Nylon 4 include those made from 2-pyrrolidone produced by converting bio-fermented glutamic acid to $\gamma$-aminobutyric acid. Since Nylon 4 features good thermal/mechanical stability and easy polymer structure design, it contributes to improvements in tire performance and strength and therefore can be suitably used.

Nylon 410, Nylon 610, Nylon 1010, Nylon 1012, Nylon 11, etc. may be made from ricinoleic acid obtained from castor oil (Ricinus communis), etc. Specifically, Nylon 410, Nylon 610, and Nylon 1010 can be produced by condensation polymerization of sebacic acid or dodecanedioic acid obtained from castor oil with any diamine compound. Nylon 11 can be produced by condensation polymerization of 11-aminoundecanoic acid obtained from castor oil.

Semi-aromatic polyamides refer to polyamides having an aromatic ring in a part of the molecular chain. Examples include Nylon 4T (PA4T), Nylon 6T (PA6T), and Nylon 10T (PA10T).

Nylon 4T, Nylon 6T, and Nylon 10T can be produced by condensation polymerization of terephthalic acid as a dicarboxylic acid with any diamine compound having the corresponding number of carbons. Here, these nylon materials may be produced from the biomass-derived terephthalic acid described above. They have a rigid cyclic structure in the molecular chain and therefore are excellent in properties such as heat resistance.

Other examples of the above-described aliphatic polyamides and semi-aromatic polyamides include polyamide 5X (where X represents the number of carbons derived from a dicarboxylic acid and is an integer or T indicating terephthalic acid) produced by polymerizing 1,5-pentanediamine derived from lysine with the dicarboxylic acid.

Examples of the fully aromatic polyamides include polyamides having a backbone in which aromatic rings are connected via amide bonds, such as polyparaphenylene telephthalamide. Like the above-mentioned aliphatic polyamides

and semi-aromatic polyamides, the fully aromatic polyamides may be produced by binding biomass-derived terephthalic acid to phenylenediamine.

Examples of the cellulose fibers include rayon, polynosic, cupra, acetate, lyocell, modal, and other fibers produced from plant materials such as woods pulp. These cellulose fibers are preferred because they have excellent environmental performance in that, for example, they are not only made from carbon-neutral raw materials, but are also biodegradable and do not emit toxic gases when burned after use. In view of the balance of process efficiency, environmental friendliness, and mechanical strength, rayon, polynosic, and lyocell are particularly preferred among these.

The cord may also be a recycled cord obtained by recovery and refinement from used products such as drink bottles or clothing, followed by re-spinning, regardless of whether it is a synthetic or biomass-derived cord.

The cord may be formed by intertwining one or more filaments. Examples include those formed by combining and first twisting two 1100 dtex multifilaments (i.e., 1100/2 dtex) for 48 times per 10 cm, followed by combining and final twisting two first twisted cords for the same number of times in the opposite or same direction with respect to that of the first twisting, and those formed by combining and first twisting two 1670 dtex multifilaments (i.e., 1670/2 dtex) for 40 times per 10 cm, followed by combining and final twisting two first twisted cords.

Moreover, the cord is preferably previously coated with an adhesive layer to ensure good adhesion to the coating rubber. The adhesive layer may be a known one. Examples include those formed by treatment with a resorcinol-formaldehyde-rubber latex (RFL), as well as those formed by epoxy treatment, for example, with an adhesive composition containing a sorbitol polyglycidyl ether and a blocked isocyanate, and then RFL treatment, and those formed by treatment with an adhesive composition containing a halohydrin compound, a blocked isocyanate compound, and a rubber latex.

Examples of the resorcinol-formaldehyde-rubber latex (RFL) include an adhesive composition containing a natural rubber and/or synthetic rubber latex and a co-condensate of phenol-formaldehyde and resorcinol as described in JP S48-11335 A. Such an adhesive composition can be prepared by, for example, a method including condensing phenol and formaldehyde in the presence of an alkaline catalyst, copolymerizing an aqueous phenol-formaldehyde resin solution with resorcinol, and mixing the resulting phenol-formaldehyde-resorcinol resin solution with a latex rubber.

Here, examples of the synthetic rubber latex include polybutadiene polymer latex, styrene-butadiene copolymer latex, polyisoprene polymer latex, butadiene-acrylonitrile copolymer latex, butadiene-vinylpyridine polymer latex, and butadiene-vinylpyridine-styrene copolymer latex.

The adhesive layer formed of the resorcinol-formaldehyde-rubber latex (RFL) may be formed by attaching a RFL adhesive (for example, by dipping the cord in a RFL liquid). The RFL adhesive is usually attached after a fiber cord is obtained by twisting, but it may be attached before or during the twisting.

The composition of the RFL adhesive is not limited and may be appropriately selected. In particular, it is preferably a composition that contains 0.1 to 10% by mass of resorcinol, 0.1 to 10% by mass of formaldehyde, and 1 to 28% by mass of latex, more preferably a composition that contains 0.5 to 3% by mass of resorcinol, 0.5 to 3% by mass of formaldehyde, and 10 to 25% by mass of latex.

For example, heating may be performed by drying the cord with the RFL adhesive composition attached thereto at 100°C to 250°C for one to five minutes and then heating the resulting cord at 150°C to 250°C for one to five minutes. The heating conditions after the drying are desirably at 180°C to 240°C for one to two minutes.

The adhesive composition containing a sorbitol polyglycidyl ether and a blocked isocyanate may be any composition that contains a sorbitol polyglycidyl ether and a blocked isocyanate. In particular, the adhesive composition desirably contains an epoxy compound that is a sorbitol polyglycidyl ether and has a chlorine content of 9.6% by mass or lower, and a blocked isocyanate.

Examples of the sorbitol polyglycidyl ether include sorbitol diglycidyl ether, sorbitol triglycidyl ether, sorbitol tetraglycidyl ether, sorbitol pentaglycidyl ether, sorbitol hexaglycidyl ether, and mixtures thereof, each of which may contain sorbitol monoglycidyl ether. The sorbitol polyglycidyl ether has a large number of epoxy groups in one molecule and can form a highly crosslinked structure.

The chlorine content of the sorbitol polyglycidyl ether is preferably 9.6% by mass or lower, more preferably 9.5% by mass or lower, still more preferably 9.4% by mass or lower, particularly preferably 9.3% by mass or lower. The lower limit of the chlorine content is not limited and may be 1% by mass or higher, for example.

In the present invention, the chlorine content of the sorbitol polyglycidyl ether can be determined in the method described in JIS K 7243-3.

The chlorine content of the sorbitol polyglycidyl ether may be reduced, for example, by reducing the amount of epichlorohydrin used in the synthesis of the epoxy compound.

The blocked isocyanate is a compound produced by reaction of an isocyanate compound and a blocking agent. The blocked isocyanate is temporarily deactivated by the group derived from the blocking agent. When heated at a predetermined temperature, the group derived from the blocking agent can dissociate to form an isocyanate group.

Examples of the isocyanate compound include those having two or more isocyanate groups in the molecule.

Examples of diisocyanates having two isocyanate groups include hexamethylene diisocyanate, diphenylmethane diisocyanate, xylylene diisocyanate, isophorone diisocyanate, phenylene diisocyanate, tolylene diisocyanate, trimethylhexamethylene diisocyanate, metaphenylene diisocyanate, naphthalene diisocyanate, diphenyl ether diisocyanate, diphenylpropane diisocyanate, and biphenyl diisocyanate, as well as isomers, alkylsubstituted products, halides, and benzene ring-hydrogenated products of these diisocyanates. Also usable are triisocyanates having three isocyanate groups, tetraisocyanates having four isocyanate groups, polymethylene polyphenyl polyisocyanates, etc. These isocyanate compounds may be used alone or in combinations of two or more. Tolylene diisocyanate, metaphenylene diisocyanate, diphenylmethane diisocyanate, hexamethylene diisocyanate, and polymethylene polyphenyl polyisocyanate are preferred among these.

Examples of the blocking agent include lactam blocking agents such as ε-caprolactam, δ-valerolactam, γ-butyrolactam, and β-propiolactam; phenolic blocking agents such as phenol, cresol, resorcinol, and xylenol; alcohol blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzyl alcohol; oxime blocking agents such as formamidoxime, acetaldoxime, acetoxime, methyl ethyl ketoxime, diacetyl monoxime, benzophenone oxime, and cyclohexanone oxime; and active methylene blocking agents such as dimethyl malonate, diethyl malonate, ethyl acetoacetate, methyl acetoacetate, and acetylacetone. Lactam blocking agents, phenolic blocking agents, and oxime blocking agents are preferred among these.

In the adhesive composition containing a sorbitol polyglycidyl ether and a blocked isocyanate, the amount of the blocked isocyanate per 100 parts by mass of the sorbitol polyglycidyl ether is preferably 50 parts by mass or more, more preferably 200 parts by mass or more. The upper limit of the amount is preferably 500 parts by mass or less, more preferably 400 parts by mass or less.

The adhesive composition containing a sorbitol polyglycidyl ether and a blocked isocyanate may optionally contain any of the following optional components: epoxy compounds other than the sorbitol polyglycidyl ether, resins copolymerizable with the sorbitol polyglycidyl ether, curing agents other than the blocked isocyanate, organic thickeners, antioxidants, photostabilizers, adhesion improvers, reinforcing agents, softeners, colorants, leveling agents, flame retardants, antistatic agents, etc.

Examples of the epoxy compounds other than the sorbitol polyglycidyl ether include glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolac glycidyl ether, and brominated bisphenol A diglycidyl ether; glycidyl esters such as hexahydrophthalic acid glycidyl ester and dimer acid glycidyl ester; glycidyl amines such as triglycidyl isocyanurate, glycidyl hydantoin, tetraglycidyl diaminodiphenylmethane, triglycidyl para-aminophenol, triglycidyl meta-aminophenol, diglycidyl aniline, diglycidyl toluidine, tetraglycidyl meta-xylenediamine, diglycidyl tribromoaniline, and tetraglycidyl bisaminomethylcyclohexane; and alicyclic or aliphatic epoxides such as 3,4-epoxycyclohexylmethyl carboxylate, epoxidized polybutadiene, and epoxidized soybean oil.

Examples of the treatment with the adhesive composition containing a sorbitol polyglycidyl ether and a blocked isocyanate include treatment performed to attach the components in RFL to the cord, and treatment optionally including subsequent heating.

For example, the attachment may be carried out by any method such as application with a roller, spraying through a nozzle, or immersion in a bath liquid (adhesive composition). In view of uniform attachment and removal of the excessive adhesive, attachment by immersion is preferred.

Moreover, to control the amount attached to the cord, other means may be further used such as squeezing with a pressure roller, scraping off with a scraper or the like, blowing off with air, suction, beating with a beater, etc.

The amount attached to the cord is preferably 1.0% by mass or more, more preferably 1.5% by mass or more, while it is preferably 3.0% by mass or less, more preferably 2.5% by mass or less.

Here, the amount attached to the cord refers to the amount of the solids in the RFL adhesive attached per 100 parts by mass of the cord.

The total solid concentration of the adhesive composition containing a sorbitol polyglycidyl ether and a blocked isocyanate is preferably 0.9% by mass or higher, more preferably 14% by mass or higher, while it is preferably 29% by mass or lower, more preferably 23% by mass or lower.

Resorcinol, formaldehyde, and a rubber latex, as well as other additives such as a vulcanization regulator, zinc oxide, an antioxidant, and a defoamer may be added to the adhesive composition containing a sorbitol polyglycidyl ether and a blocked isocyanate.

For example, heating may be performed by drying the reinforcing material with the RFL adhesive composition attached thereto at 100°C to 250°C for one to five minutes and then heating the resulting material at 150°C to 250°C for one to five minutes. The heating conditions after the drying are desirably at 180°C to 240°C for one to two minutes.

The adhesive composition containing a halohydrin compound, a blocked isocyanate compound, and a rubber latex may be any composition containing these components. It is desirably an adhesive composition that contains a halohydrin compound, a blocked isocyanate compound, and a rubber latex and does not contain resorcinol and formaldehyde.

Examples of the halohydrin compound include compounds produced by reacting a polyol compound and an

epihalohydrin compound (halohydrin ether).

The polyol compound refers to a compound having two or more hydroxyl groups in the molecule. Examples include glycols such as ethylene glycol, propylene glycol, polyethylene glycol, and polypropylene glycol, hydroxylic acids such as erythritol, xylitol, sorbitol, and tartaric acid, glyceric acid, glycerol, diglycerol, polyglycerol, trimethylolpropane, trimethylolethane, and pentaerythritol.

Examples of the epihalohydrin compound include epichlorohydrin and epibromohydrin.

Examples of the halohydrin compound include fluoroalcohol compounds, chlorohydrin compounds, bromohydrin compounds, and iodohydrin compounds. Halogenated sorbitols and halogenated glycerols are preferred among these.

The halogen content based on 100% by mass of the halohydrin compound is preferably 5.0 to 15.0% by mass, more preferably 7.0 to 13.0% by mass, still more preferably 9.0 to 12.0% by mass.

Examples of the blocked isocyanate compound include compounds described above for the blocked isocyanate. Moreover, examples of the rubber latex include those described above for the rubber latex.

The adhesive composition containing a halohydrin compound, a blocked isocyanate compound, and a rubber latex desirably contains 10.0 to 30.0 parts by mass of the halohydrin compound, 10.0 to 30.0 parts by mass of the blocked isocyanate compound, and 80.0 to 240.0 parts by mass of the rubber latex. Moreover, the adhesive composition desirably does not contain resorcinol and formaldehyde.

The adhesive layer formed of the adhesive composition containing a halohydrin compound, a blocked isocyanate compound, and a rubber latex is formed on the surface of the cord using the adhesive composition. For example, the adhesive layer may be formed by, but not limited to, immersion, brushing, casting, spraying, roll coating, or knife coating.

FIG. 4 is an enlarged cross-sectional view showing the tread portion 4 and its vicinity in the tire 2 in FIG. 1. Tt denotes the thickness of the tread portion 4. Tb denotes the thickness of the interior layer 38 or the exterior layer 40 in the belt layer 16.

The Tt of the tread portion 4 is preferably 7.6 mm or more, more preferably 8.0 mm or more, still more preferably 9.0 mm or more, further preferably 10.0 mm or more, while it is preferably 15.0 mm or less, more preferably 12.0 mm or less, still more preferably 11.0 mm or less. When the Tt is within the range indicated above, the advantageous effect tends to be better achieved.

In the present invention, the "thickness Tt of a tread portion" refers to the thickness of the tread portion on the tire equator CL in a radial cross section of the tire. The thickness Tt of the tread portion is measured along the normal line of the tread surface on the tire equator. It is a distance in the tire from the tread surface to an interface of another reinforcing layer containing fiber material (e.g., steel, textile) such as a belt layer, a carcass layer, or a belt-reinforcing layer, the interface being on the side of the outermost surface of the tire. When the tread portion has a groove on the tire equator, the thickness is a straight distance from a plane defined by a straight line connecting the outermost edges of the groove in the tire radial direction. In the tire 2 in FIG. 4, the thickness Tt of the tread portion is a straight distance from a plane defined by a straight line connecting the outermost edges of a groove 26 in the tire radial direction to the outermost surface of the band layer 18 in the tire radial direction, where the plane corresponds to the tread surface on the tire equator CL.

Tb denotes the thickness of the interior layer 38 or the exterior layer 40 in the belt layer 16.

The thickness Tb of each layer in the belt layer 16 is preferably 0.50 mm or more, more preferably 0.68 mm or more, still more preferably 0.70 mm or more, further preferably 0.80 mm or more, while it is preferably 1.20 mm or less, more preferably 1.00 mm or less, still more preferably 0.96 mm or less, particularly preferably 0.90 mm or less. When the Tb is within the range indicated above, the advantageous effect tends to be better achieved.

In the present invention, the "thickness of a belt layer" refers to the thickness of a belt layer including steel monofilaments and a coating rubber coating the steel monofilaments in a cross-section cut along a plane including the rotational axis of the tire, in other words, the thickness of the belt layer on the tire equator CL in the tire radial direction. The thickness of the interior layer 38 (a belt layer) in a two-layer belt layer consisting of the interior layer 38 and the exterior layer 40 in FIG. 2 refers to the thickness of the interior layer 38 on the tire equator CL, while the thickness of the exterior layer 40 (a belt layer) refers to the thickness of the exterior layer 40 on the tire equator CL.

To better achieve the advantageous effect, desirably, the tire 2 includes the tread portion 4, and a product (Tt $\times$ E) of the thickness Tt (mm) of the tread portion and the number E (number/50 mm) of the steel monofilaments in the tire width direction in the belt layer is 600 (mm·number/50 mm) or less.

The product of Tt $\times$ E is preferably 550 (mm·number/50 mm) or less, more preferably 520 (mm·number/50 mm) or less, still more preferably 510 (mm·number/50 mm) or less, further preferably 460 (mm·number/50 mm) or less, further preferably 440 (mm·number/50 mm) or less, further preferably 400 (mm·number/50 mm) or less. The lower limit is not limited, and it is preferably 300 (mm·number/50 mm) or more, more preferably 350 (mm·number/50 mm) or more, still more preferably 352 (mm·number/50 mm) or more. When the product is within the range indicated above, the advantageous effect tends to be better achieved.

The mechanism by which the advantageous effect can be better achieved by controlling the product of Tt $\times$ E within the range indicated above, particularly 600 (mm·number/50 mm) or less, is not clear, but it is believed as follows.

The larger the thickness Tt of the tread is, the longer the distance between the tread surface to the belt layer in the tire becomes, making it harder to release the heat in the belt layer. Moreover, a large number E of the steel cords is considered to increase heat generation at the interface between the steel cords and the coating rubber in the belt layer. A large product of Tt × E will make it harder to release the heat generated at a belt cord/rubber layer interface in the belt layer. Thus, the product is controlled to be not more than a predetermined value to suppress heat build-up in the belt layer. Presumably, this can facilitate the improvement of durability during high-speed driving.

Meanwhile, with an excessively small product of Tt × E, the belt layer may greatly deform when the tire rolls on a curb or a step on the road, so that it is potentially broken. This issue can be prevented by adjusting the product to not less than the predetermined value.

Presumably, durability during high-speed driving is thus improved.

To better achieve the advantageous effect, a product (Tb × E) of the thickness Tb (mm) of the widest belt layer in the radial cross-section of the tire and the number E (number/50 mm) of the steel monofilaments in the tire width direction in the belt layer is desirably 51 (mm·number/50 mm) or less.

The product of Tb × E is preferably 49 (mm·number/50 mm) or less, more preferably 48 (mm·number/50 mm) or less, still more preferably 45 (mm·number/50 mm) or less, further preferably 44 (mm·number/50 mm) or less, further preferably 43 (mm·number/50 mm) or less, particularly preferably 41 (mm·number/50 mm) or less. The lower limit is not limited, and it is preferably 20 (mm·number/50 mm) or more, more preferably 25 (mm·number/50 mm) or more, still more preferably 30 (mm·number/50 mm) or more, further preferably 35 (mm·number/50 mm) or more, further preferably 37 (mm· number/50 mm) or more. When the product is within the range indicated above, the advantageous effect tends to be better achieved.

In FIG. 1, a belt layer 16 is located radially inward of the tread portion 4. The belt layer 16 is stacked on the carcass 14. The belt layer 16 reinforces the carcass 14. In the tire 2 in FIG. 1, the belt layer 16 consists of the interior layer 38 and the exterior layer 40. As is clear from FIG. 1, the interior layer 38 is desirably slightly wider in the axial direction than the exterior layer 40. In the tire 2, the axial width of the belt layer 16 is preferably at least 0.6 times, but preferably not more than 0.9 times the cross-sectional width of the tire 2.

In the tire 2 in FIG. 1, an innerliner 20 is located inward of the carcass 14. The innerliner 20 is bonded to the inner surface of the carcass 14. The base material rubber of the innerliner 20 is typically a butyl rubber or a halogenated butyl rubber. The innerliner 20 maintains the internal pressure of the tire 2.

Each chafer 22 is located near the bead 12. In this embodiment, the chafer 22 desirably consists of a rubber and a fabric impregnated with the rubber. The chafer 22 may be integrated with the clinch 10.

In the tire 2, the tread portion 4 has grooves 26 including main grooves 42. As shown in FIG. 1, the tread portion 4 has a plurality of, specifically three, main grooves 42 engraved thereon. The main grooves 42 are positioned at intervals in the axial direction. Four ribs 44 extending in the circumferential direction are defined by the three main grooves 42 engraved on the tread portion 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

The rubber layers (the cap layer 30, the base layer 28, etc. in FIG. 1) included in the tread portion 4 (single-layer tread, two-layer tread, three or more-layer tread portion, etc.) in the tire 2 are formed of the respective tread rubber compositions. Moreover, the belt layer 16 (the interior layer 38, the exterior layer 40, etc.) includes belt cords 17A and a coating rubber 17B coating the belt cords 17A. The coating rubber is formed of a belt layer coating rubber composition.

The tread rubber composition and the belt layer coating rubber composition each contain one or more rubber components.

The rubber components contribute to crosslinking and generally correspond to polymer components which have a weight average molecular weight (Mw) of 10000 or more and which are not extractable with acetone. The rubber components are solid at room temperature (25°C).

The weight average molecular weight of the rubber components is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKgel Super-Multipore HZ-M available from Tosoh Corporation) and calibrated with polystyrene standards.

Examples of rubber components that may be used in the tread rubber composition and the belt layer coating rubber composition include diene-based rubbers. Examples of diene-based rubbers include isoprene-based rubbers, polybutadiene rubbers (BR), styrene-butadiene rubbers (SBR), styrene-isoprene-butadiene rubbers (SIBR), ethylenepropylene-diene rubbers (EPDM), chloroprene rubbers (CR), and acrylonitrile-butadiene rubbers (NBR). Other examples

include butyl-based rubbers and fluororubbers. These may be used alone or in combinations of two or more. To better achieve the advantageous effect, isoprene-based rubbers, BR, and SBR are preferred, with isoprene-based rubbers being more preferred. Here, these rubber components may be subjected to the below-described modification or hydrogenation process. Rubbers extended with oils, resins, liquid rubber components, etc. are also usable.

The diene-based rubbers may be either unmodified or modified diene-based rubbers.

The modified diene-based rubbers may be any diene-based rubber having a functional group interactive with filler such as silica. Examples include a chain end-modified diene-based rubber obtained by modifying at least one chain end of a diene-based rubber with a compound (modifier) having the above functional group (i.e., a chain end-modified diene-based rubber terminated with the functional group); a backbone-modified diene-based rubber having the functional group in the backbone; a backbone- and chain end-modified diene-based rubber having the functional group in both the backbone and a chain end (e.g., a backbone- and chain end-modified diene-based rubber in which the backbone has the functional group and at least one chain end is modified with the modifier); and a chain end-modified diene-based rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

The amount of isoprene-based rubbers, if present, based on 100% by mass of the rubber component content in the tread rubber composition is preferably 5% by mass or more, more preferably 10% by mass or more, still more preferably 15% by mass or more, while it is preferably 300 by mass or less, more preferably 25% by mass or less, still more preferably 20% by mass or less. When the amount is within the range indicated above, the advantageous effect tends to be better achieved.

The amount of isoprene-based rubbers based on 100% by mass of the rubber component content in the belt layer coating rubber composition is preferably 5% by mass or more, more preferably 50% by mass or more, still more preferably 75% by mass or more, particularly preferably 85% by mass or more, and may be 100% by mass. When the amount is within the range indicated above, the advantageous effect tends to be better achieved.

Any BR may be used, and examples include high-cis BR having high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or higher. The cis content is more preferably 95% by mass or higher, still more preferably 980 by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

Moreover, the BR may be either unmodified or modified BR. Examples of the modified BR include those into which functional groups as listed for the modified diene-based rubbers have been introduced. The BR may also be hydrogenated polybutadiene polymers (hydrogenated BR).

For example, usable commercial BR products are available from Ube Industries, Ltd., JSR Corporation, Asahi Kasei Corporation, Zeon Corporation, etc.

The amount of BR based on 100% by mass of the rubber component content in the tread rubber composition is preferably 5% by mass or more, more preferably 10% by mass or more, still more preferably 15% by mass or more. The upper limit of the amount is preferably 50% by mass or less, more preferably 30% by mass or less, still more preferably 20% by mass or less. When the amount is within the range indicated above, the advantageous effect tends to be better achieved.

The amount of BR, if present, based on 100% by mass of the rubber component content in the belt layer coating

rubber composition is preferably 5% by mass or more, more preferably 10% by mass or more, still more preferably 150 by mass or more. The upper limit of the amount is preferably 30% by mass or less, more preferably 25% by mass or less, still more preferably 20% by mass or less. When the amount is within the range indicated above, the advantageous effect tends to be better achieved.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content (amount of styrene) of the SBR is preferably 5% by mass or higher, more preferably 20% by mass or higher, still more preferably 21% by mass or higher, further preferably 25% by mass or higher. The styrene content is preferably 45% by mass or lower, more preferably 40% by mass or lower, still more preferably 350 by mass or lower. When the styrene content is within the range indicated above, handling stability during high-speed driving tends to be improved.

Herein, the styrene content can be measured by $^1$H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)) .

The vinyl bond content (vinyl content) of the SBR is preferably 3% by mass or higher, more preferably 5% by mass or higher, still more preferably 7% by mass or higher. The vinyl bond content is preferably 80% by mass or lower, more preferably 70% by mass or lower, still more preferably 660 by mass or lower. When the vinyl bond content is within the range indicated above, handling stability during high-speed driving tends to be improved.

Herein, the vinyl bond content (1,2-butadiene unit content) can be measured by infrared absorption spectrometry.

The vinyl bond content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl bond content of the SBR refers to the vinyl bond content of the one SBR, while when multiple types of SBR are used, it refers to the average vinyl bond content.

The average vinyl bond content of the SBR can be calculated using the equation: Σ{amount of each SBR × (100 (% by mass) - styrene content (% by mass) of the each SBR) × vinyl bond content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified or modified SBR. Examples of the modified SBR include those into which functional groups as listed for the modified diene-based rubbers have been introduced. The SBR may also be hydrogenated styrene-butadiene copolymers (hydrogenated SBR) .

SBR products manufactured or sold by Sumitomo Chemical Co., Ltd., JSR Corporation, Asahi Kasei Corporation, Zeon Corporation, etc. may be used as the SBR.

The amount of SBR based on 100% by mass of the rubber component content in the tread rubber composition is preferably 5% by mass or more, more preferably 50% by mass or more, still more preferably 70% by mass or more, further preferably 80% by mass or more. The upper limit of the amount is preferably 95% by mass or less, more preferably 90% by mass or less, still more preferably 85% by mass or less. When the amount is within the range indicated above, the advantageous effect tends to be better achieved.

The amount of SBR, if present, based on 100% by mass of the rubber component content in the belt layer coating rubber composition is preferably 5% by mass or more, more preferably 10% by mass or more, still more preferably 150 by mass or more. The upper limit of the amount is preferably 30% by mass or less, more preferably 25% by mass or less, still more preferably 20% by mass or less. When the amount is within the range indicated above, the advantageous effect tends to be better achieved.

The tread rubber composition or belt layer coating rubber composition may contain a filler.

Any filler may be used, including materials known in the rubber field. Examples include inorganic fillers such as carbon black, silica, calcium carbonate, talc, alumina, clay, aluminum hydroxide, aluminum oxide, and mica; and hard-to-disperse fillers.

The total amount of the filler (the total amount of fillers such as silica and carbon black) per 100 parts by mass

of the rubber component content in the tread rubber composition is preferably 30 parts by mass or more, more preferably 60 parts by mass or more, still more preferably 65 parts by mass or more, further preferably 70 parts by mass or more, particularly preferably 80 parts by mass or more. The upper limit of the total amount is preferably 200 parts by mass or less, more preferably 140 parts by mass or less, still more preferably 100 parts by mass or less. When the total amount is within the range indicated above, the advantageous effect tends to be better achieved.

The total amount of the filler (the total amount of fillers such as silica and carbon black) per 100 parts by mass of the rubber component content in the belt layer coating rubber composition is preferably 10 parts by mass or more, more preferably 40 parts by mass or more, still more preferably 55 parts by mass or more, particularly preferably 60 parts by mass or more. The upper limit of the total amount is preferably 120 parts by mass or less, more preferably 100 parts by mass or less, still more preferably 80 parts by mass or less. When the total amount is within the range indicated above, the advantageous effect tends to be better achieved.

Carbon-derived fillers (carbon-containing fillers), such as carbon black, and silica are preferred among the fillers.

Any carbon black may be used in the tread rubber composition or belt layer coating rubber composition. Examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more. In addition to the conventional carbon black made from mineral oils, etc., carbon black made from biomass materials such as lignin is also usable.

The nitrogen adsorption specific surface area ($N_2SA$) of the carbon black in the tread rubber composition is preferably 50 $m^2/g$ or more, more preferably 70 $m^2/g$ or more, still more preferably 90 $m^2/g$ or more, further preferably 114 $m^2/g$ or more. The $N_2SA$ is preferably 200 $m^2/g$ or less, more preferably 150 $m^2/g$ or less, still more preferably 120 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

The nitrogen adsorption specific surface area ($N_2SA$) of the carbon black in the belt layer coating rubber composition is preferably 10 $m^2/g$ or more, more preferably 20 $m^2/g$ or more, still more preferably 25 $m^2/g$ or more. The $N_2SA$ is preferably 80 $m^2/g$ or less, more preferably 60 $m^2/g$ or less, still more preferably 45 $m^2/g$ or less, particularly preferably 35 $m^2/g$ or less. When the $N_2SA$ is within the range indicated above, the advantageous effect tends to be better achieved.

The amount of carbon black per 100 parts by mass of the rubber component content in the tread rubber composition is preferably 1 part by mass or more, more preferably 3 parts by mass or more, still more preferably 5 parts by mass or more. The upper limit of the amount is preferably 100 parts by mass or less, more preferably 50 parts by mass or less, still more preferably 45 parts by mass or less, further preferably 40 parts by mass or less, particularly preferably 30 parts by mass or less. When the amount is within the range indicated above, the advantageous effect tends to be better achieved.

The amount of carbon black per 100 parts by mass of the rubber component content in the belt layer coating rubber composition is preferably 10 parts by mass or more, more preferably 40 parts by mass or more, still more preferably 55 parts by mass or more, particularly preferably 60 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

In particular, the amount of carbon black having a nitrogen adsorption specific surface area of 45 $m^2/g$ or less per 100 parts by mass of the rubber component content in the belt layer coating rubber composition is preferably 5 parts by mass or more, more preferably 20 parts by mass or more, still more preferably 25 parts by mass or more, particularly preferably 30 parts by mass or more. The upper limit of the amount is preferably 60 parts by mass or less, more preferably 50 parts by mass or less, still more preferably 40 parts by mass or less. When the amount is within the range indicated above, the advantageous effect tends to be better achieved.

The mechanism by which the advantageous effect can be better achieved by blending a predetermined amount of carbon black having a $N_2SA$ within the range indicated above, particularly 5 to 60 parts by mass of carbon black having a $N_2SA$ of 45 $m^2/g$ or less, in the belt layer coating rubber composition is not clear, but it is believed that the use of the large particle size carbon black in the coating rubber can facilitate reduction of heat generation in the belt layer and easily improve the responsiveness of the belt layer, thereby improving handling stability during high-speed driving.

Examples of silica usable in the tread rubber composition or belt layer coating rubber composition include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to the above-mentioned types of silica, silica made from biomass materials such as rice husks is also usable.

The nitrogen adsorption specific surface area ($N_2SA$) of the silica is preferably 50 $m^2/g$ or more, more preferably 100 $m^2/g$ or more, still more preferably 150 $m^2/g$ or more, further preferably 175 $m^2/g$ or more, particularly preferably

180 $m^2/g$ or more, most preferably 190 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

The amount of silica per 100 parts by mass of the rubber component content in the tread rubber composition is preferably 20 parts by mass or more, more preferably 50 parts by mass or more, still more preferably 65 parts by mass or more, particularly preferably 75 parts by mass or more. The upper limit of the amount is preferably 200 parts by mass or less, more preferably 140 parts by mass or less, still more preferably 90 parts by mass or less. When the amount is within the range indicated above, the advantageous effect tends to be better achieved.

The mechanism by which the advantageous effect can be better achieved by adjusting the amount of silica within the range indicated above is not clear, but it is believed that the use of a predetermined amount of silica tends to facilitate reduction of the tan $\delta$ and easily improve responsiveness, thereby improving handling stability during high-speed driving.

The amount of silica, if present, per 100 parts by mass of the rubber component content in the belt layer coating rubber composition is preferably 5 parts by mass or more, more preferably 10 parts by mass or more, still more preferably 15 parts by mass or more. The upper limit of the amount is preferably 30 parts by mass or less, more preferably 25 parts by mass or less, still more preferably 20 parts by mass or less. When the amount is within the range indicated above, the advantageous effect tends to be better achieved.

When the tread rubber composition or belt layer coating rubber composition contains silica, it preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the tread rubber composition or belt layer coating rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. One type of these microfibrillated plant fibers may be used alone or two or more types of these may be used in combination.

Herein, the term "cellulose microfibrils" typically refers to cellulose fibers having an average fiber diameter of not more than 10 um, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers per 100 parts by mass of the rubber component content in the tread rubber composition or belt layer coating rubber composition is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect

tends to be better achieved.

The tread rubber composition or belt layer coating rubber composition may contain a plasticizer.

The term "plasticizer" refers to a material that can impart plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber component content in the tread rubber composition is preferably 5 parts by mass or more, more preferably 10 parts by mass or more, still more preferably 15 parts by mass or more, while it is preferably 80 parts by mass or less, more preferably 50 parts by mass or less, still more preferably 25 parts by mass or less. When the amount is within the range indicated above, the advantageous effect tends to be better achieved. It should be noted that when the above-mentioned extended rubbers are used, the amount of the extender components used in the extended rubbers is included in the amount of plasticizers.

The amount of plasticizers (the total amount of plasticizers) per 100 parts by mass of the rubber component content in the belt layer coating rubber composition is preferably 30 parts by mass or less, more preferably 10 parts by mass or less, still more preferably 5 parts by mass or less, further preferably 2 parts by mass or less, particularly preferably 1 part by mass or less, and may be 0 parts by mass. When the amount is within the range indicated above, the advantageous effect tends to be better achieved. It should be noted that when the above-mentioned extended rubbers are used, the amount of the extender components used in the extended rubbers are included in the amount of plasticizers.

Any liquid plasticizer (plasticizer which is liquid at room temperature (25°C)) may be used in the tread rubber composition or belt layer coating rubber composition, and examples include oils and liquid polymers (liquid resins, liquid diene polymers, etc.). These may be used alone or in combinations of two or more.

The amount of liquid plasticizers per 100 parts by mass of the rubber component content in the tread rubber composition is preferably 5 parts by mass or more, more preferably 10 parts by mass or more, still more preferably 15 parts by mass or more, while it is preferably 50 parts by mass or less, more preferably 30 parts by mass or less, still more preferably 25 parts by mass or less. When the amount is within the range indicated above, the advantageous effect tends to be better achieved. Here, a similar range is also suitable for the amount of oils.

The amount of liquid plasticizers per 100 parts by mass of the rubber component content in the belt layer coating rubber composition is preferably 30 parts by mass or less, more preferably 10 parts by mass or less, still more preferably 5 parts by mass or less, further preferably 2 parts by mass or less, particularly preferably 1 part by mass or less, and may be 0 parts by mass. When the amount is within the range indicated above, the advantageous effect tends to be better achieved. Here, a similar range is also suitable for the amount of oils.

Examples of oils include process oils, plant oils, and mixtures thereof. Examples of process oils include paraffinic process oils, aromatic process oils, and naphthenic process oils, such as mild extract solvates (MES), distillate aromatic extracts (DAE), treated distillate aromatic extracts (TDAE), treated residual aromatic extracts (TRAE), and residual aromatic extracts (RAE). Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., Japan Energy, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. In view of life cycle assessment, oils obtained by purifying lubricating oils used in rubber mixing machines, engines, or other applications, or waste cooking oils used in cooking establishments may also be used as the oils.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the tread rubber composition or belt layer coating rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

The amount of the resins, if present, per 100 parts by mass of the rubber component content in the tread rubber

composition is preferably 80 parts by mass or less, more preferably 50 parts by mass or less, still more preferably 30 parts by mass or less, and may be 0 parts by mass. When the amount is within the range indicated above, the advantageous effect tends to be better achieved.

The amount of the resins, if present, per 100 parts by mass of the rubber component content in the belt layer coating rubber composition is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the resins is preferably 60°C or higher, more preferably 70°C or higher, still more preferably 80°C or higher. The upper limit of the softening point is preferably 160°C or lower, more preferably 130°C or lower, still more preferably 115°C or lower. When the softening point is within the range indicated above, handling stability during high-speed driving tends to be improved.

Here, the softening point of the resins is determined in accordance with JIS K 6220-1:2001 using a ring and ball softening point measuring apparatus. The temperature at which the ball drops down is defined as the softening point. The softening point of the resins indicated above is usually higher by 50°C ± 5°C than the glass transition temperature of the resins.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene skeleton and is classified as a monoterpene ($C_{10}H_{16}$), sesquiterpene ($C_{15}H_{24}$), diterpene ($C_{20}H_{32}$), or other terpenes. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4414370, JP S59-6207 A, JP H5-58005 B, JP H1-313522 A, US Patent No. 5010166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

In view of properties such as cracking resistance and ozone resistance, the tread rubber composition or belt layer coating rubber composition preferably contains an antioxidant.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3' ,5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content in the tread rubber composition or belt layer coating rubber composition is preferably 0.5 parts by mass or more, more preferably 1.0 parts by mass or more, still more preferably 2.0 parts by mass or more. The amount is preferably 7.0 parts by mass or less, more preferably 4.0 parts by mass or less, still more preferably 3.0 parts by mass or less.

The tread rubber composition or belt layer coating rubber composition preferably contains stearic acid.

The amount of stearic acid per 100 parts by mass of the rubber component content in the tread rubber composition or belt layer coating rubber composition is preferably 0.5 parts by mass or more, more preferably 1.0 parts by mass or more, still more preferably 1.5 parts by mass or more, further preferably 2.0 parts by mass or more. The amount is preferably 7.0 parts by mass or less, more preferably 4.0 parts by mass or less, still more preferably 3.0 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The tread rubber composition or belt layer coating rubber composition preferably contains zinc oxide.

The amount of zinc oxide per 100 parts by mass of the rubber component content in the tread rubber composition or belt layer coating rubber composition is preferably 0.5 parts by mass or more, more preferably 1.0 parts by mass or more, still more preferably 2.0 parts by mass or more. The amount is preferably 12.0 parts by mass or less, more preferably 11.0 parts by mass or less, still more preferably 10.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The tread rubber composition or belt layer coating rubber composition may contain a wax.

The amount of waxes per 100 parts by mass of the rubber component content in the tread rubber composition or belt layer coating rubber composition is preferably 0.5 parts by mass or more, more preferably 1.0 parts by mass or more, still more preferably 2.0 parts by mass or more. The amount is preferably 10.0 parts by mass or less, more preferably 7.0 parts by mass or less, still more preferably 5.0 parts by mass or less.

Any wax may be used, and examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan

wax, rice wax, and jojoba wax; animal waxes such as beeswax, lanolin, and spermaceti; mineral waxes such as ozokerite, ceresin, and petrolatum; and purified products of the foregoing. For example, usable commercial products are available from Ouchi Shinko Chemical Industrial Co., Ltd., Nippon Seiro Co., Ltd., Seiko Chemical Co., Ltd., etc.

The tread rubber composition or belt layer coating rubber composition preferably contains sulfur to moderately form crosslinks between the polymer chains, thereby imparting good properties.

The amount of sulfur per 100 parts by mass of the rubber component content in the tread rubber composition or belt layer coating rubber composition is preferably 0.1 parts by mass or more, more preferably 1.0 parts by mass or more, still more preferably 1.7 parts by mass or more. The amount is preferably 6.0 parts by mass or less, more preferably 5.0 parts by mass or less, still more preferably 4.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The tread rubber composition or belt layer coating rubber composition preferably contains a vulcanization accelerator.

The amount of vulcanization accelerators in the tread rubber composition or belt layer coating rubber composition is not limited and may be freely determined according to the desired curing rate and crosslink density. The amount of vulcanization accelerators per 100 parts by mass of the rubber component content is preferably 0.5 parts by mass or more, more preferably 1.0 parts by mass or more, still more preferably 2.5 parts by mass or more. The upper limit of the amount is preferably 8.0 parts by mass or less, more preferably 6.0 parts by mass or less, still more preferably 4.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators, guanidine vulcanization accelerators, and benzothiazole vulcanization accelerators are preferred among these.

In addition to the above-mentioned components, the tread rubber composition or belt layer coating rubber composition may appropriately contain compounding agents commonly used in the tire industry such as releasing agents or other materials.

The tread portion 4 desirably includes at least one rubber layer including the above-described rubber composition. Desirably, the outermost rubber layer of the tread portion 4 in the tire radial direction (the cap layer 30 in the exemplary embodiment in FIG. 1) includes the above-described suitable rubber composition.

The belt layer coating rubber composition may also contain other components such as an organic acid cobalt salt or a thermosetting resin.

Here, the term "thermosetting resin" refers to a resin component that can cause an effective reaction with heat and that, unlike resins that fall into plasticizers, and is not extractable with solvents. The features distinguish thermoplastic resins from resins included in plasticizers.

Examples of organic acid cobalt salts include cobalt stearate, cobalt naphthenate, cobalt neodecanoate, cobalt boron 3 neodecanoate, and cobalt abietate. Usable commercial products are available from DIC Corporation, etc. These may be used alone or in combinations of two or more. Preferred among these is cobalt stearate.

The amount of organic acid cobalt salts, calculated as cobalt element, per 100 parts by mass of the rubber component content in the belt layer coating rubber composition is preferably 0.1 parts by mass or more, while it is preferably 1.5 parts by mass or less, more preferably 1.2 parts by mass or less, still more preferably 0.8 parts by mass or less, further preferably 0.5 parts by mass or less. When the amount is within the range indicated above, the advantageous effect tends to be better achieved.

Suitable examples of thermosetting resins include resorcinol condensates (resorcinol resins) and phenol resins. These may be used alone or in combinations of two or more.

Examples of usable resorcinol condensates include compounds (resins) represented by the following formula:

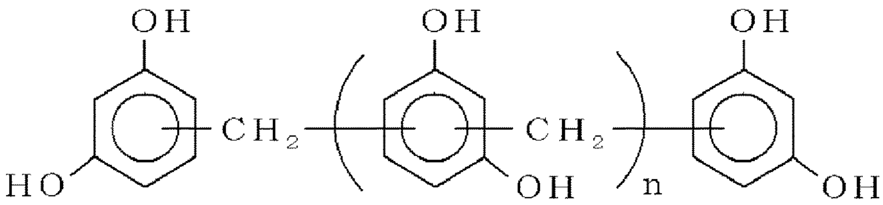

wherein n is an integer of 1 or more.

The resorcinol condensates may also be modified resorcinol condensates. Examples of usable modified resorcinol condensates include compounds (resins) represented by the following formula:

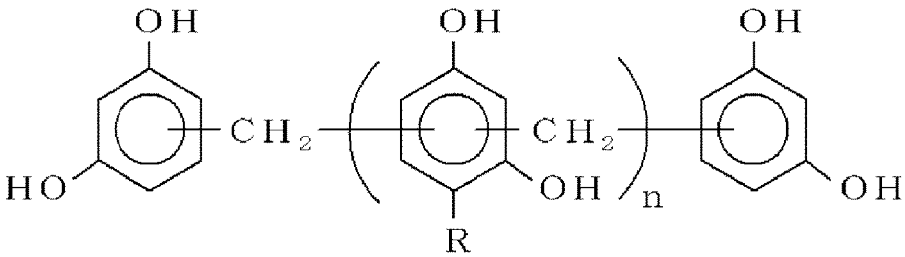

wherein n is an integer of 1 or more, and R is an alkyl group.

Usable commercial resorcinol condensates are available from Taoka Chemical Co., Ltd., INDSPEC Chemical Corporation, etc.

The phenol resins can be produced by reacting phenol with an aldehyde such as formaldehyde in the presence of an acid or alkali catalyst.

The phenol resins may also be modified phenol resins which have been modified with cashew oil, tall oil, rosin, etc. Cashew oil-modified phenol resins are preferred among the modified phenol resins. Moreover, examples of usable cashew oil-modified phenol resins include compounds (resins) represented by the following formula:

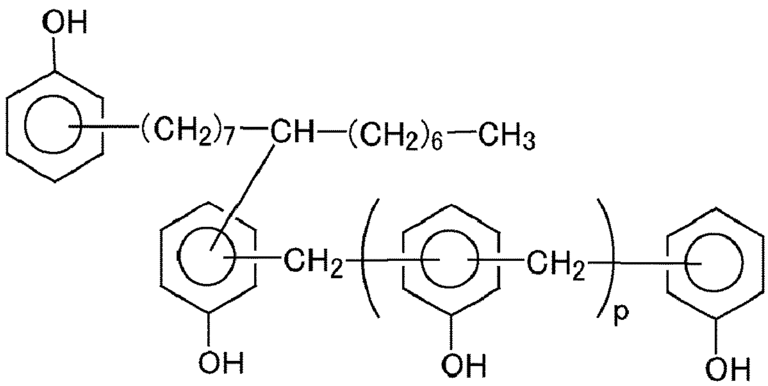

wherein p is an integer of 1 to 9, preferably 5 or 6.

Usable commercial phenol resins are available from Sumitomo Bakelite Co., Ltd., etc.

The amount of thermosetting resins per 100 parts by mass of the rubber component content in the belt layer coating rubber composition is preferably 1 part by mass or more, more preferably 3 parts by mass or more, still more preferably 5 parts by mass or more, while it is preferably 15 parts by mass or less, more preferably 10 parts by mass or less, still more preferably 8 parts by mass or less. When the amount is within the range indicated above, the advantageous effect tends to be better achieved.

The materials described above may also be used in rubber compositions for forming tire components other than the tread portion 4 and belt layer 16 while appropriately changing the amounts of the materials.

The tread rubber composition, belt layer coating rubber composition, etc. may be prepared by known methods. For example, they may be prepared by kneading the compounding components using a rubber kneading machine such as an open roll mill or a Banbury mixer and then vulcanizing the kneaded mixture.

The kneading conditions are as follows. In a base kneading step of kneading additives other than vulcanizing

agents and vulcanization accelerators, the kneading temperature is usually 50°C to 200°C, preferably 80°C to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120°C to 200°C, preferably 140°C to 180°C.

To better achieve the advantageous effect, the E*b (MPa) of the coating rubber (belt layer coating rubber composition, vulcanized rubber composition) in the belt layer 16 in the tire 2 is desirably 5.5 MPa or more and 15.0 MPa or less.

Here, the E*b (MPa) refers to the complex modulus of the coating rubber (belt layer coating rubber composition) in the belt layer 16 measured at a temperature of 30°C, an initial strain of 10%, a dynamic strain of 1%, a frequency of 10 Hz, and elongation mode.

The E*b is preferably 6.0 MPa or more, more preferably 6.2 MPa or more, still more preferably 6.5 MPa or more, while it is preferably 13.0 MPa or less, more preferably 12.0 MPa or less, still more preferably 10.0 MPa or less. When the E*b is within the range indicated above, the advantageous effect tends to be better achieved.

Here, it is sufficient that the E*b (MPa) of the coating rubber in at least one belt layer in the belt layer 16 is within the range indicated above. It is better that a larger number of belt layers each include a coating rubber having E*b (MPa) within the range indicated above. In the tire 2 in FIG. 1, preferably, the coating rubber in at least one of the interior layer 38 and the exterior layer 40 has E*b (MPa) within the range indicated above. More preferably, the coating rubbers in both the layers have E*b (MPa) within the range indicated above. In particular, the coating rubber in the widest belt layer in the tire axial direction in the radial cross-section of the tire desirably has E*b (MPa) within the range indicated above.

Herein, the E* of the rubber composition refers to the E* of the vulcanized (cross-linked) rubber composition determined by a viscoelastic testing.

Herein, the E* of the rubber composition is measured at a temperature of 30°C, an initial strain of 10%, a dynamic strain of 1%, a frequency of 10 Hz, and elongation mode.

The E* can be controlled by varying the types and amounts of chemicals (in particular, rubber components, fillers, softeners such as oils) blended in the rubber composition. For example, the E* tends to be reduced by, for example, increasing the amount of softeners or reducing the amount of fillers.

To better achieve the advantageous effect, desirably, the belt layer 16 in the tire 2 includes the coating rubber 17B, and a ratio (E*b/D) of the complex modulus E*b (MPa) of the coating rubber 17B in the belt layer 16 to the outer diameter D (mm) of the single-strand steel monofilaments in the belt layer 16 is 14.3(MPa/mm) or higher.

The ratio E*b/D is preferably 14.5 MPa/mm or higher, more preferably 15.0 MPa/mm or higher, still more preferably 15.5 MPa/mm or higher, further preferably 16.0 MPa/mm or higher, further preferably 16.3 MPa/mm or higher, further preferably 17.0 MPa/mm or higher, particularly preferably 17.1 MPa/mm or higher, while it is preferably 40.0 MPa/mm or lower, more preferably 30.0 MPa/mm or lower, still more preferably 26.0 MPa/mm or lower, further preferably 22.4 MPa/mm or lower, further preferably 20.0 MPa/mm or lower, further preferably 19.1 MPa/mm or lower. When the ratio is within the range indicated above, the advantageous effect tends to be better achieved.

It is sufficient that the ratio E*b/D in at least one belt layer in the belt layer 16 is within the range indicated above. It is better that the ratio E*b/D of a larger number of belt layers is within the range indicated above. In the tire 2 in FIG. 1, preferably the ratio E*b/D in at least one of the interior layer 38 and the exterior layer 40 is within the range indicated above. More preferably, the ratio E*b/D in both the layers is within the range indicated above. In particular, the ratio E*b/D of the coating rubber (belt layer coating rubber composition) in the widest belt layer in the tire axial direction in the radial cross-section of the tire is desirably within the range indicated above.

The mechanism by which the advantageous effect can be better achieved by controlling the ratio E*b/D within the range indicated above, particularly 15.0 MPa/mm or higher, is not clear, but it is believed as follows. The larger the cord diameter is, the more the rubber layer moves on the surface of the cords. Controlling the elastic modulus of the rubber layer to be sufficiently high relative to the cord diameter facilitates suppression of microscale deformation of the rubber on the surface of the cords. Presumably, this can further improve durability during high-speed driving.

Meanwhile, since the complex modulus of elasticity correlates with the loss modulus (exothermic property), an excessively high complex modulus of elasticity tends to increase heat generation in the belt layer, thereby reducing the effect of improving durability during high-speed driving. This issue may be prevented by adjusting the complex modulus of elasticity to not more than a predetermined value, particularly 40.0 MPa/mm or less.

Presumably, durability during high-speed driving is thus improved.

The present invention may be applied to a tire such as a pneumatic tire or a non-pneumatic tire, preferably a pneumatic tire. In particular, the tire may be suitably used as a summer tire or winter tire (e.g., studless winter tire, snow tire, studded tire). The tire may be used as a tire for passenger cars, large passenger cars, large SUVs, heavy duty vehicles such as trucks and buses, light trucks, or motorcycles, or as a racing tire (high performance tire), etc.

The tire can be produced by usual methods. For example, an unvulcanized tread rubber composition containing various materials may be extruded into the shape of a tread portion. Separately, steel cords (steel monofilaments) and a belt layer coating rubber composition containing various materials for coating the steel cords may be combined and extruded into the shape of a belt layer. These tire components may be assembled with other tire components on a tire building machine in a usual manner to build an unvulcanized tire. The unvulcanized tire may then be heated and pressurized in a vulcanizer, whereby the tire can be produced.

Although particularly preferred embodiments of the present invention are described in detail above, the present invention is not limited to the embodiments shown in the figures and may be implemented in various modified embodiments.

Examples (working examples) which are considered preferable to implement the present invention are described below although the scope of the invention is not limited to the examples.

Prototype 195/65R15 pneumatic tires for passenger cars (test tires) having the basic structure shown in FIG. 1 are produced according to the specifications indicated in the tables.

The common specifications of the test tires are as follows.

Belt layer: two layers (a two-layer belt layer)
Angle of belt cords in each belt layer relative to tire circumferential direction: 20 degrees (crossed)
Belt cords in each belt layer: single-strand (steel monofilaments)

The test tires prepared according to the specifications varied as shown in the tables were simulated. The results calculated according to the below-described evaluations are shown in the table.

The reference comparative example is Comparative Example 1.

<Viscoelastic testing>

A sample with a width of 4 mm, a length of 20 mm, and a thickness of 1 mm is collected from the coating rubber in the band layer of each test tire. The complex modulus E* of each sample is measured using RSA series available from TA Instruments under conditions including a temperature of 30°C, an initial strain of 10%, a dynamic strain of 1%, a frequency of 10 Hz, and elongation mode.

<Durability during high-speed driving>

The test tire is subjected to running on a drum using a drum tester under the conditions of a standard rim (6.0J), an internal pressure of 260 kPa, a load of 4.56 kN, a road surface temperature of 80°C, and a speed of 230 km/h. The running time until peeling damage occurs in the tread rubber is measured. The result is expressed as an index relative to the result in the reference comparative example set to 100. A higher index indicates better durability during high-speed driving.

The materials of each tread blend (tread rubber composition) in the tables are as follows.

SBR: NS616 (non-oil-extended SBR, styrene content: 21% by mass, vinyl content: 66% by mass, Tg: -23°C, Mw: 240000) available from Zeon Corporation
BR: BR150B (cis content: 98% by mass) available from Ube Industries, Ltd.
Silica: ULTRASIL VN3 ($N_2SA$: 175 $m^2/g$) available from Degussa
Carbon black N220: DIABLACK N220 ($N_2SA$: 114 $m^2/g$) available from Mitsubishi Chemical Corporation
Oil: Diana Process oil AH-24 (aromatic process oil) available from Idemitsu Kosan Co., Ltd.
Silane coupling agent: Si69 (bis(3-triethoxysilylpropyl)tetrasulfide) available from Degussa
Wax: Ozoace 0355 available from Nippon Seiro Co., Ltd.
Antioxidant 6C: NOCRAC 6C (N-(1,3-dimethylbutyl)-N'-phenyl-p-phenylenediamine) available from Ouchi Shinko Chemical Industrial Co., Ltd.
Antioxidant RD: NOCRAC 224 (polymerized 2,2,4-trimethyl-1,2-dihydroquinoline) available from Ouchi Shinko Chemical Industrial Co., Ltd.
Stearic acid: stearic acid available from NOF Corporation
Zinc oxide: zinc oxide #3 available from Hakusui Tech Co., Ltd.
Sulfur: powdered sulfur available from Tsurumi Chemical Industry Co., Ltd.
Vulcanization accelerator CZ: NOCCELER CZ-G (N-cyclohexyl-2-benzothiazolylsulfenamide) available from Ouchi Shinko Chemical Industrial Co., Ltd.
Vulcanization accelerator DZ: NOCCELER DZ (N,N-dicyclohexyl-2-benzothiazolylsulfenamide, DCBS) available from Ouchi Shinko Chemical Industrial Co., Ltd.

The materials of the coating rubber blend in each belt layer (belt layer coating rubber composition) in the tables are as follows.

NR: TSR20
Carbon black N326: DIABLACK N326 ($N_2SA$: 80 $m^2/g$) available from Mitsubishi Chemical Corporation
Oil: Diana Process oil AH-24 (aromatic process oil) available from Idemitsu Kosan Co., Ltd.
Thermosetting resin: Sumikanol 620 (modified resorcinol condensate, softening point: 100°C) available from Taoka Chemical Co., Ltd.
Stearic acid: stearic acid available from NOF Corporation
Cobalt stearate: cost-F (cobalt content: 9.5% by mass) available from DIC Corporation
Antioxidant RD: NOCRAC 224 (polymerized 2,2,4-trimethyl-1,2-dihydroquinoline) available from Ouchi Shinko Chemical Industrial Co., Ltd.
Zinc oxide: zinc oxide #3 available from Hakusui Tech Co., Ltd.
Sulfur: powdered sulfur available from Tsurumi Chemical Industry Co., Ltd.
Vulcanization accelerator DZ: NOCCELER DZ (N,N-dicyclohexyl-2-benzothiazolylsulfenamide, DCBS) available from Ouchi Shinko Chemical Industrial Co., Ltd.

[Table 1]

| | | Comparative Example | | | |
|---|---|---|---|---|---|
| | | 1 | 2 | 3 | 4 |
| Specification | Structure of steel monofilaments | 1 × 4 × 0.28HT twisted | 1 × 1 × 0.54ST single-strand | 1 × 4 × 0.28HT twisted | 1 × 1 × 0.38ST single-strand |
| | Outer diameter D (mm) of steel monofilaments | 0.66 | 0.54 | 0.66 | 0.38 |
| | Number E (number/50 mm) | 42 | 35 | 35 | 75 |
| | Tensile strength at break B (N) | 720 | 668 | 720 | 367 |
| | D × E | 28 | 19 | 23 | 29 |
| | Thickness Tb (mm) of each belt layer | 1.25 | 1.25 | 1.25 | 0.80 |
| | Distance S (mm) between steel filaments in belt layers | 0.59 | 0.71 | 0.59 | 0.42 |
| | E*b (MPa) of coating rubber in each belt layer | 6.5 | 6.5 | 6.5 | 6.5 |
| | E*b/D | 9.8 | 12.0 | 9.8 | 17.1 |
| | Thickness Tt (mm) of tread portion | 8.0 | 10.0 | 10.0 | 10.0 |
| | Tt × E | 336 | 350 | 350 | 750 |
| | Tb × E | 53 | 44 | 44 | 60 |
| Tread blend (parts by mass) | SBR | 85 | 85 | 85 | 85 |
| | BR | 15 | 15 | 15 | 15 |
| | Silica | 20 | 20 | 20 | 20 |
| | Carbon black N220 | 50 | 45 | 50 | 45 |
| | Oil | 15 | 15 | 15 | 15 |
| | Silane coupling agent | 2 | 2 | 2 | 2 |
| | Antioxidant 6C | 2 | 2 | 2 | 2 |
| | Antioxidant RD | 1 | 1 | 1 | 1 |
| | Wax | 2 | 2 | 2 | 2 |
| | Stearic acid | 2 | 2 | 2 | 2 |
| | Zinc oxide | 2 | 2 | 2 | 2 |
| | Sulfur | 1 | 1 | 1 | 1 |
| | Vulcanization accelerator CZ | 2 | 2 | 2 | 2 |
| | Vulcanization accelerator DZ | 0.5 | 0.5 | 0.5 | 0.5 |
| Belt layer coating rubber blend (parts by mass) | NR | 100 | 100 | 100 | 100 |
| | Carbon black N326 (BET80) | 60 | 60 | 60 | 60 |
| | Oil | 2 | 2 | 2 | 2 |
| | Thermosetting resin | 5 | 5 | 5 | 5 |
| | Stearic acid | 1.5 | 1.5 | 1.5 | 1.5 |
| | Cobalt stearate | 1.5 | 1.5 | 1.5 | 1.5 |
| | Antioxidant RD | 1 | 1 | 1 | 1 |
| | Zinc oxide | 10 | 10 | 10 | 10 |
| | Sulfur | 6 | 6 | 6 | 6 |
| | Vulcanization accelerator DZ | 1 | 1 | 1 | 1 |
| Evaluation | Durability during high-speed driving (index) | 100 | 94 | 89 | 94 |

[Table 2]

| | | Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Specification | Structure of steel monofilaments | 1 × 1 × 0.42ST single-strand | 1 × 1 × 0.38ST single-strand | 1 × 1 × 0.38ST single-strand | 1 × 1 × 0.38ST single-strand | 1 × 1 × 0.38ST single-strand | 1 × 1 × 0.38ST single-strand | 1 × 1 × 0.29HT single-strand | 1 × 1 × 0.38ST single-strand | 1 × 1 × 0.25ST single-strand | 1 × 1 × 0.40ST single-strand | 1 × 1 × 0.34ST single-strand | 1 × 1 × 0.38ST single-strand | 1 × 1 × 0.42HT single-strand | 1 × 1 × 0.42HT single-strand |
| | Outer diameter D (mm) of steel monofilaments | 0.42 | 0.38 | 0.38 | 0.38 | 0.38 | 0.38 | 0.29 | 0.38 | 0.25 | 0.40 | 0.34 | 0.38 | 0.42 | 0.42 |
| | Number E (number/50 mm) | 51 | 51 | 51 | 51 | 51 | 44 | 51 | 51 | 51 | 46 | 60 | 44 | 65 | 65 |
| | Tensile strength at break B (N) | 570 | 367 | 367 | 367 | 367 | 367 | 220 | 367 | 180 | 420 | 367 | 367 | 570 | 570 |
| | D × E | 21 | 19 | 19 | 19 | 19 | 17 | 15 | 19 | 13 | 18 | 20 | 17 | 27 | 27 |
| | Thickness Tb (mm) of each belt layer | 1.00 | 0.96 | 0.80 | 0.80 | 0.80 | 0.80 | 0.80 | 0.80 | 0.80 | 0.80 | 0.80 | 0.80 | 0.68 | 0.96 |
| | Distance S (mm) between steel filaments in belt layers | 0.58 | 0.58 | 0.42 | 0.42 | 0.42 | 0.42 | 0.42 | 0.20 | 0.42 | 0.42 | 0.42 | 0.42 | 0.26 | 0.54 |
| | E*b (MPa) of coating rubber in each belt layer | 6.5 | 6.5 | 6.5 | 6.5 | 6.5 | 6.5 | 6.5 | 6.5 | 6.5 | 6.5 | 6.5 | 6.5 | 6.5 | 6.5 |
| | E*b/D | 15.5 | 17.1 | 17.1 | 17.1 | 17.1 | 17.1 | 22.4 | 17.1 | 26.0 | 16.3 | 19.1 | 17.1 | 15.5 | 15.5 |
| | Thickness Tt (mm) of tread portion | 12.0 | 12.0 | 12.0 | 12.0 | 10.0 | 10.0 | 10.0 | 10.0 | 10.0 | 10.0 | 10.0 | 8.0 | 12.0 | 12.0 |
| | Tt × E | 612 | 612 | 612 | 612 | 510 | 440 | 510 | 510 | 510 | 460 | 600 | 352 | 780 | 780 |
| | Tb × E | 51 | 49 | 41 | 41 | 41 | 35 | 41 | 41 | 41 | 37 | 48 | 35 | 44 | 62 |
| Tread blend (parts by mass) | SBR | 85 | 85 | 85 | 85 | 85 | 85 | 85 | 85 | 85 | 85 | 85 | 85 | 85 | 85 |
| | BR | 15 | 15 | 15 | 15 | 15 | 15 | 15 | 15 | 15 | 15 | 15 | 15 | 15 | 15 |
| | Silica | 20 | 20 | 20 | 20 | 20 | 20 | 20 | 20 | 20 | 20 | 20 | 20 | 20 | 20 |
| | Carbon black N220 | 45 | 50 | 45 | 50 | 45 | 45 | 45 | 45 | 45 | 45 | 45 | 45 | 45 | 45 |
| | Oil | 15 | 15 | 15 | 15 | 15 | 15 | 15 | 15 | 15 | 15 | 15 | 15 | 15 | 15 |
| | Silane coupling agent | 2 | 2 | 2 | 2 | 2 | 2 | 2 | 2 | 2 | 2 | 2 | 2 | 2 | 2 |
| | Antioxidant 6C | 2 | 2 | 2 | 2 | 2 | 2 | 2 | 2 | 2 | 2 | 2 | 2 | 2 | 2 |
| | Antioxidant RD | 1 | 1 | 1 | 1 | 1 | 1 | 1 | 1 | 1 | 1 | 1 | 1 | 1 | 1 |
| | Wax | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 |
| | Sulfur | 1 | 1 | 1 | 1 | 1 | 1 | 1 | 1 | 1 | 1 | 1 | 1 | 1 | 1 |
| | Vulcanization accelerator CZ | 2 | 2 | 2 | 2 | 2 | 2 | 2 | 2 | 2 | 2 | 2 | 2 | 2 | 2 |
| | Vulcanization accelerator DZ | 0.5 | 0.5 | 0.5 | 0.5 | 0.5 | 0.5 | 0.5 | 0.5 | 0.5 | 0.5 | 0.5 | 0.5 | 0.5 | 0.5 |
| Belt layer coating rubber blend (parts by mass) | NR | 100 | 100 | 100 | 100 | 100 | 100 | 100 | 100 | 100 | 100 | 100 | 100 | 100 | 100 |
| | Carbon black N326 (BET80) | 60 | 60 | 60 | 60 | 60 | 60 | 60 | 60 | 60 | 60 | 60 | 60 | 60 | 60 |
| | Oil | 2 | 2 | 2 | 2 | 2 | 2 | 2 | 2 | 2 | 2 | 2 | 2 | 2 | 2 |
| | Thermosetting resin | 5 | 5 | 5 | 5 | 5 | 5 | 5 | 5 | 5 | 5 | 5 | 5 | 5 | 5 |
| | Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 |
| | Cobalt stearate | 1.5 | 1.5 | 1.5 | 1.5 | 1.5 | 1.5 | 1.5 | 1.5 | 1.5 | 1.5 | 1.5 | 1.5 | 1.5 | 1.5 |
| | Antioxidant RD | 1 | 1 | 1 | 1 | 1 | 1 | 1 | 1 | 1 | 1 | 1 | 1 | 1 | 1 |
| | Zinc oxide | 10 | 10 | 10 | 10 | 10 | 10 | 10 | 10 | 10 | 10 | 10 | 10 | 10 | 10 |
| | Sulfur | 6 | 6 | 6 | 6 | 6 | 6 | 6 | 6 | 6 | 6 | 6 | 6 | 6 | 6 |
| | Vulcanization accelerator DZ | 1 | 1 | 1 | 1 | 1 | 1 | 1 | 1 | 1 | 1 | 1 | 1 | 1 | 1 |
| Evaluation | Durability during high-speed driving (index) | 116 | 122 | 128 | 133 | 144 | 140 | 112 | 112 | 110 | 148 | 140 | 142 | 105 | 102 |

Exemplary embodiments of the present invention include:

Embodiment 1. A tire, including a belt layer,

the belt layer including single-strand steel monofilaments,
the belt layer including a number E of 38/50 mm or more and 68/50 mm or less of the single-strand steel monofilaments in a tire width direction when viewed in a radial cross-section of the tire.

Embodiment 2. The tire according to Embodiment 1,
wherein the single-strand steel monofilaments have a tensile strength at break of 250 to 480 N.
Embodiment 3. The tire according to Embodiment 1 or 2,

wherein the belt layer includes two or more belt layers, and
the belt layers include at least one pair of adjacent belt layers in which a distance S between a single-strand steel monofilament on the tire equator in one belt layer and a single-strand steel monofilament on the tire equator in the other belt layer is 0.30 to 0.50 mm.

Embodiment 4. The tire according to any combination with any one of Embodiments 1 to 3,

wherein the belt layer includes a coating rubber, and
a ratio (E*b/D) of a complex modulus E*b (MPa) of the coating rubber in the belt layer to an outer diameter D (mm) of the single-strand steel monofilaments in the belt layer is 14.3 (MPa/mm) or higher.

Embodiment 5. The tire according to any combination with any one of Embodiments 1 to 4,

wherein the tire further includes a tread portion, and
a product (Tt × E) of a thickness Tt (mm) of the tread portion and the number E (number/50 mm) of the single-strand steel monofilaments in the tire width direction in the belt layer is 600 (mm·number/50 mm) or less.

Embodiment 6. The tire according to any combination with any one of Embodiments 1 to 5,
wherein a product (D × E) of the outer diameter D (mm) and the number E (number/50 mm) in the tire width direction of the single-strand steel monofilaments in the belt layer is 25 (mm·number/50 mm) or less.
Embodiment 7. The tire according to any combination with any one of Embodiments 1 to 6,
wherein the outer diameter D of the single-strand steel monofilaments in the belt layer is 0.32 to 0.48 mm.
Embodiment 8. The tire according to any combination with any one of Embodiments 1 to 7,
wherein a product (Tb × E) of a thickness Tb (mm) of a widest belt layer in the radial cross-section of the tire and the number E (number/50 mm) of the single-strand steel monofilaments in the tire width direction in the belt layer is 51 (mm·number/50 mm) or less.
Embodiment 9. The tire according to any combination with any one of Embodiments 1 to 8,
wherein the coating rubber in the belt layer has a E*b (MPa) of 5.5 MPa or more and 15.0 MPa or less.
Embodiment 10. The tire according to any combination with any one of Embodiments 1 to 9,
wherein the number E of the single-strand steel monofilaments in the tire width direction in the belt layer is 38/50 mm or more and less than 50/50 mm.
Embodiment 11. The tire according to any combination with any one of Embodiments 1 to 10,

wherein the tire further includes a tread portion, and
a product (Tt × E) of the thickness Tt (mm) of the tread portion and the number E (number/50 mm) of the single-strand steel monofilaments in the tire width direction in the belt layer is 400 (mm·number/50 mm) or less.

Embodiment 12. The tire according to any combination with any one of Embodiments 1 to 11,
wherein the thickness Tb of the belt layer is 0.70 mm or more.
Embodiment 13. The tire according to any combination with any one of Embodiments 1 to 12,

wherein the belt layer includes a coating rubber,
the coating rubber includes a belt layer coating rubber composition, and
the belt layer coating rubber composition contains a carbon black having a nitrogen adsorption specific surface area of 80 $m^2$/g or less.

Embodiment 14. The tire according to any combination with any one of Embodiments 1 to 13,

wherein the belt layer includes a coating rubber,
the coating rubber includes a belt layer coating rubber composition, and
the belt layer coating rubber composition contains a thermosetting resin.

Embodiment 15. The tire according to Embodiment 14,
wherein the thermosetting resin is at least one selected from the group consisting of resorcinol condensates and phenol resins.

REFERENCE SIGNS LIST

2 tire
4 tread portion
6 sidewall
8 wing
10 clinch
12 bead
14 carcass
16 belt layer
17 belt layer
17A belt cord
17A5 belt cord on the tire equator in first belt layer
17A6 belt cord on the tire equator in second belt layer
17B coating rubber
18 band layer
18A organic fiber cord
18B reinforcing rubber coating organic fiber cord
20 innerliner
22 chafer
26 groove
28 base layer
30 cap layer
32 bead core
34 bead apex
36 carcass ply
36a main portion
36b folded portion
38 interior layer (first belt layer)
40 exterior layer (second belt layer)
42 main groove
44 rib
Tt thickness of tread portion
Tb thickness of each belt layer
CL tire equator

## Claims

1. A tire, comprising a belt layer,

the belt layer comprising single-strand steel monofilaments,
the belt layer comprising a number E of 38/50 mm or more and 68/50 mm or less of the single-strand steel monofilaments in a tire width direction when viewed in a radial cross-section of the tire.

2. The tire according to claim 1,

wherein the single-strand steel monofilaments have a tensile strength at break of 250 to 480 N.

**3.** The tire according to claim 1 or 2,

wherein the belt layer comprises two or more belt layers, and
the belt layers include at least one pair of adjacent belt layers in which a distance S between a single-strand steel monofilament on the tire equator in one belt layer and a single-strand steel monofilament on the tire equator in the other belt layer is 0.30 to 0.50 mm.

**4.** The tire according to any one of claims 1 to 3,

wherein the belt layer comprises a coating rubber, and
a ratio (E*b/D) of a complex modulus E*b (MPa) of the coating rubber in the belt layer to an outer diameter D (mm) of the single-strand steel monofilaments in the belt layer is 14.3 (MPa/mm) or higher.

**5.** The tire according to any one of claims 1 to 4,

wherein the tire further comprises a tread portion, and
a product (Tt × E) of a thickness Tt (mm) of the tread portion and the number E (number/50 mm) of the single-strand steel monofilaments in the tire width direction in the belt layer is 600 (mm·number/50 mm) or less.

**6.** The tire according to any one of claims 1 to 5,
wherein a product (D × E) of the outer diameter D (mm) and the number E (number/50 mm) in the tire width direction of the single-strand steel monofilaments in the belt layer is 25 (mm·number/50 mm) or less.

**7.** The tire according to any one of claims 1 to 6,
wherein the outer diameter D of the single-strand steel monofilaments in the belt layer is 0.32 to 0.48 mm.

**8.** The tire according to any one of claims 1 to 7,
wherein a product (Tb × E) of a thickness Tb (mm) of a widest belt layer in the radial cross-section of the tire and the number E (number/50 mm) of the single-strand steel monofilaments in the tire width direction in the belt layer is 51 (mm·number/50 mm) or less.

**9.** The tire according to any one of claims 1 to 8,
wherein the coating rubber in the belt layer has a E*b (MPa) of 5.5 MPa or more and 15.0 MPa or less.

**10.** The tire according to any one of claims 1 to 9,
wherein the number E of the single-strand steel monofilaments in the tire width direction in the belt layer is 38/50 mm or more and less than 50/50 mm.

**11.** The tire according to any one of claims 1 to 10,

wherein the tire further comprises a tread portion, and
a product (Tt × E) of the thickness Tt (mm) of the tread portion and the number E (number/50 mm) of the single-strand steel monofilaments in the tire width direction in the belt layer is 400 (mm·number/50 mm) or less.

**12.** The tire according to any one of claims 1 to 11,
wherein the thickness Tb of the belt layer is 0.70 mm or more.

**13.** The tire according to any one of claims 1 to 12,

wherein the belt layer comprises a coating rubber,
the coating rubber includes a belt layer coating rubber composition, and
the belt layer coating rubber composition comprises a carbon black having a nitrogen adsorption specific surface area of 80 $m^2/g$ or less.

**14.** The tire according to any one of claims 1 to 13,

wherein the belt layer comprises a coating rubber,
the coating rubber includes a belt layer coating rubber composition, and
the belt layer coating rubber composition comprises a thermosetting resin.

**15.** The tire according to claim 14,
wherein the thermosetting resin is at least one selected from the group consisting of resorcinol condensates and phenol resins.

FIG.1

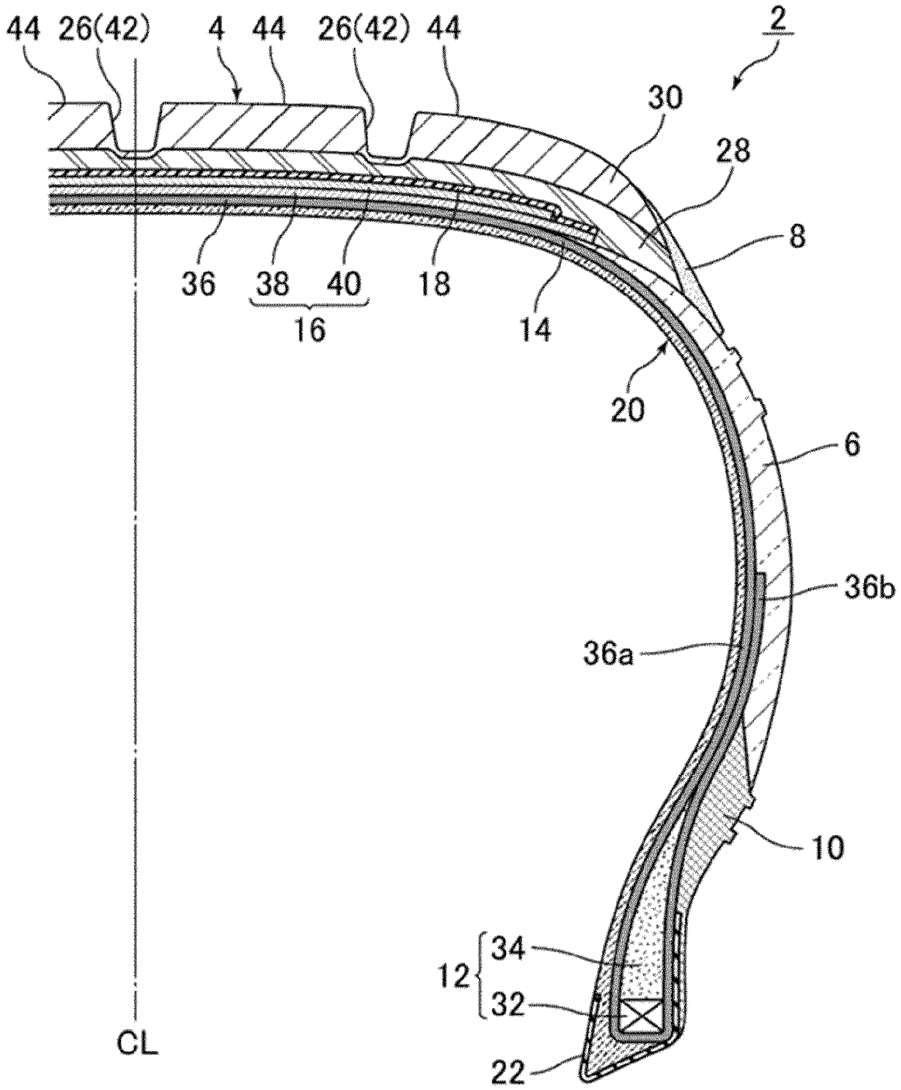
44 26(42) 4 44 26(42) 44
2
30
28
8
36 38 40 18
16
14
20
6
36b
36a
10
12 34
32
22
CL

FIG.2

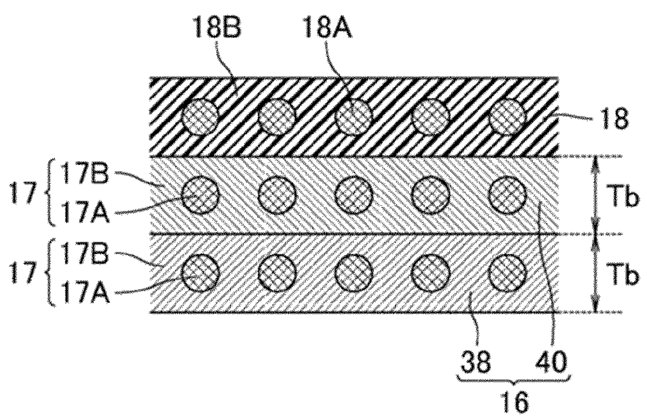
18B 18A
18
17 17B
17A
Tb
17 17B
17A
Tb
38 40
16

FIG.3

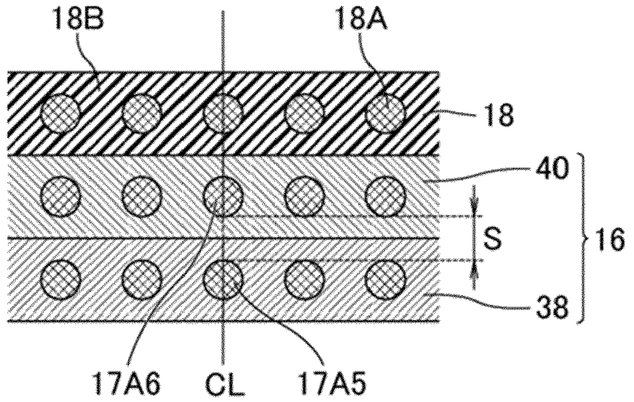
18B
18A
18
40
S
16
38
17A6
CL
17A5

FIG.4

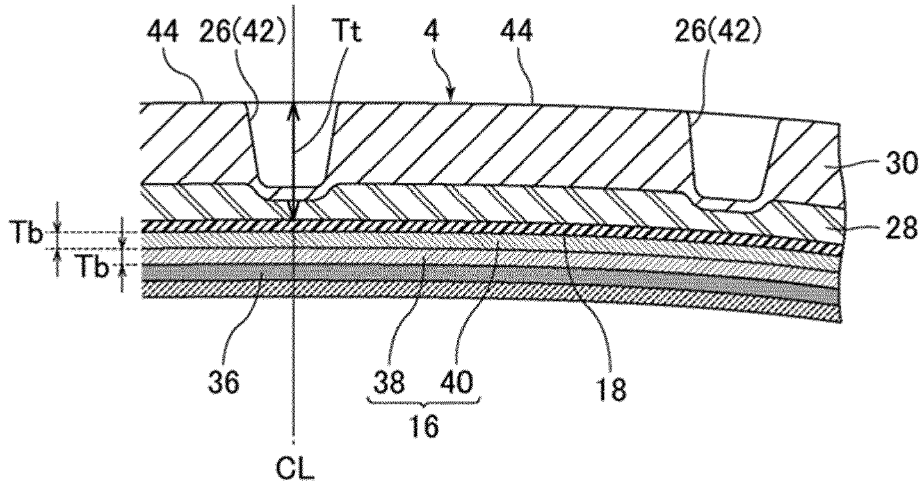
44
26(42)
Tt
4
44
26(42)
30
28
Tb
Tb
36
38
40
16
18
CL

Europäisches Patentamt
European Patent Office
Office européen des brevets

# EUROPEAN SEARCH REPORT

Application Number
EP 23 21 6375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2020/406683 A1 (BONNET AYMERIC [FR] ET AL) 31 December 2020 (2020-12-31)<br>* paragraphs [0031] - [0048], [0061], [0088] - [0100], [0112], [0117]; claims 23-44; figures 1,2; tables 1-4 * | 1,5-8, 10-12<br>4,9, 13-15 | INV.<br>B60C1/00<br>B60C9/00<br>B60C9/20 |
| X<br>Y | US 2018/022159 A1 (ASTAIX CAMILLE [FR] ET AL) 25 January 2018 (2018-01-25)<br>* paragraphs [0024], [0074] - [0081], [0086] - [0092]; claims 19-45; figures 1,2 * | 1-3,5-8, 10-15<br>4,9 | |
| X<br>Y | EP 1 184 203 A2 (SUMITOMO RUBBER IND [JP]) 6 March 2002 (2002-03-06)<br>* paragraphs [0007], [0018] - [0025]; claims 1-4; figures 1-3; table 1 * | 1,5-8, 10,11, 13-15<br>4,9 | |
| Y | WO 2022/145121 A1 (SUMITOMO RUBBER IND [JP]) 7 July 2022 (2022-07-07)<br>* claims 1-7; tables 1,2 * | 4,9, 13-15 | TECHNICAL FIELDS SEARCHED (IPC) |
| Y | EP 0 675 161 A1 (SUMITOMO RUBBER IND [JP]) 4 October 1995 (1995-10-04)<br>* the whole document * | 4,13-15 | B60C |

The present search report has been drawn up for all claims

2

| Place of search | Date of completion of the search | Examiner |
|---|---|---|
| Munich | 15 April 2024 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 21 6375

This annex lists the patent family members relating to the patent documents cited in the above-mentioned European search report. The members are as contained in the European Patent Office EDP file on
The European Patent Office is in no way liable for these particulars which are merely given for the purpose of information.

15-04-2024

| Patent document cited in search report | Publication date | Patent family member(s) | Publication date |
|---|---|---|---|
| US 2020406683 A1 | 31-12-2020 | CN 111094014 A | 01-05-2020 |
| | | EP 3658387 A1 | 03-06-2020 |
| | | FR 3069486 A1 | 01-02-2019 |
| | | US 2020406683 A1 | 31-12-2020 |
| | | WO 2019020886 A1 | 31-01-2019 |
| US 2018022159 A1 | 25-01-2018 | CN 107257742 A | 17-10-2017 |
| | | EP 3253592 A1 | 13-12-2017 |
| | | FR 3032149 A1 | 05-08-2016 |
| | | JP 2018508405 A | 29-03-2018 |
| | | US 2018022159 A1 | 25-01-2018 |
| | | WO 2016124419 A1 | 11-08-2016 |
| EP 1184203 A2 | 06-03-2002 | EP 1184203 A2 | 06-03-2002 |
| | | JP 2002067617 A | 08-03-2002 |
| | | US 2002055583 A1 | 09-05-2002 |
| WO 2022145121 A1 | 07-07-2022 | CN 116635246 A | 22-08-2023 |
| | | EP 4269130 A1 | 01-11-2023 |
| | | JP WO2022145121 A1 | 07-07-2022 |
| | | US 2024051339 A1 | 15-02-2024 |
| | | WO 2022145121 A1 | 07-07-2022 |
| EP 0675161 A1 | 04-10-1995 | DE 69502431 T2 | 03-09-1998 |
| | | EP 0675161 A1 | 04-10-1995 |
| | | JP 3291114 B2 | 10-06-2002 |
| | | JP H07258470 A | 09-10-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019206643 A
- JP S4811335 A
- US 4414370 A
- JP S596207 A
- JP H558005 B
- JP H1313522 A
- US 5010166 A


### Non-patent literature cited in the description


- TREND. Toagosei Co., Ltd, 2000, vol. 3, 42-45